# EUROPEAN PATENT APPLICATION

(11) **EP 4 283 436 A1**
(43) Date of publication of application: **29.11.2023**
(21) Application number: 23717010.5
(22) Date of filing: 30.03.2023
(51) Int. Cl.: G06F 1/16, G09F 9/30

(54) **ELECTRONIC APPARATUS COMPRISING FLEXIBLE DISPLAY**

(30) Priority: 30.03.2022 KR 20220039986; 06.07.2022 KR 20220083201
(71) Applicant: Samsung Electronics Co., Ltd., Suwon-Si, Gyeonggi-do 16677 (KR)
(72) Inventor: KIM, Seonghoon, Suwon-si, Gyeonggi-do 16677 (KR); RYU, Bummoo, Suwon-si, Gyeonggi-do 16677 (KR); PARK, Myeongsil, Suwon-si, Gyeonggi-do 16677 (KR); AN, Jungshul, Suwon-si, Gyeonggi-do 16677 (KR); KIM, Kwangtai, Suwon-si, Gyeonggi-do 16677 (KR); YEOM, Donghyun, Suwon-si, Gyeonggi-do 16677 (KR)
(74) Representative: Gulde & Partner
(86) International application number: PCT/KR2023/004231
(87) International publication number: WO 2023/191522

(57) **Abstract**

According to various embodiments, an electronic device (200) includes a first housing (210), a second housing (220), a hinge device (320), and a flexible display (230). The hinge device (320) foldably combines the first housing (210) and second housing (220). The flexible display (230) has a folding region (230c) folded through the hinge device (320), a first bending region (230d) located at one side of the folding region (230c), and a second bending region (230e) located on other side of the folding region (230c), and includes a window layer (410), a display panel (430) disposed under the window layer (410), and a support plate (450) disposed under the display panel (430) and including a pattern (4531) having at least one opening and/or at least one recess (4541, 4541a, 4542) formed at a position corresponding to at least the folding region (230c). The first bending region (230d) is configured to refrain from being attached to the first housing (210) and a first hinge plate (322), and the second bending region (230e) is configured to refrain from being attached to the second housing (220) and a second hinge plate (327). The support plate (450) maintains a specific thickness in a portion corresponding to the first bending region (230d) and the second bending region (230e).

## Description

### [Technical Field]

Various embodiments of the disclosure relate to an electronic device including a flexible display.

### [Background Art]

Electronic devices are gradually becoming slimmer, and are being improved to increase their rigidity, strengthen their design aspects, and differentiate their functional features. The electronic device is being developed to have various shapes, departing from a uniform rectangular shape. The electronic device may have a deformable structure that provides high portability and also provides a large-screen display in use. In connection with such a deformable structure, the electronic device (e.g., a foldable electronic device) may have at least two housings capable of being folded or unfolded with respect to each other, and a flexible display disposed to be foldably supported by the at least two housings. For example, the electronic device may require a structure (e.g., a stack structure and/or a support structure of the flexible display)capable of inducing a standardized bending operation of the flexible display in response to a folding operation.

### [Disclosure]

### [Technical Problem]

A foldable electronic device may include a hinge device, and a first housing and a second housing connected in opposite directions through the hinge device. The foldable electronic device may operatein scheme of in-folding and/or out-folding when the first housing is rotated relative to the second housing within a range of 0 degrees to 360 degrees through the hinge device. The foldable electronic device may include a flexible display disposed to be supported at least in partby the first housing and the second housing in an unfolded state. The flexible display may be provided with supporting force and bending characteristics through a plurality of layers (e.g., a polymer layer such as a cushion layer) and a support plate stacked in an inner space of an electronic device or under a display panel of the flexible display.

The foldable electronic device may include a first hinge plate (e.g., a first wing plate) operating with the first housing and a second hinge plate (e.g., a second wing plate) operating with the second housing. For example, the pair of hinge plates may form substantially the same plane as the first housing and the second housing in an unfolded state, and maintain a bending shape (e.g., a waterdropshape)of the flexible display in a folded state. Therefore, the flexible display may include a folding region located in a portion corresponding to the hinge device, a first bending regionlocated in a portion corresponding to a combining portion between the first housing and the first hinge plate, and a second bending region located in a portion corresponding to a combining portion between the second housing and the second hinge plate. The first bending region and the second bending region may be inverse bending sections that are bent in the opposite direction to the folding region and maintains a standardized bending shape to reduce deformation or folding marks of the flexible displayin a folded state.

However, because the electronic device does not have any corresponding structure for improving the bendability of the first bending region and the second bending region corresponding to a portion where the first housing and the second housing and the pair of hinge plates are combined, frequent folding operations in the corresponding regions result in poor surface quality such as folding marks, which may cause deterioration in usability.

Various embodiments of the disclosure may provide an electronic device including a flexible display capable of always providing excellent surface quality even in frequent operation.

Various embodiments of the disclosure may provide an electronic device including a flexible display capable of helping to reinforce the rigidity of theelectronic device while providing a structure for improving bendability for a first bending region and a second bending region that are reversely bent in a folded state.

However, the problems to be solved in the disclosure are not limited to the above-mentioned problems and may be expanded in various ways without departing from the scope of the disclosure.

### [Technical Solution]

According to various embodiments of the disclosure, an electronic device includes a first housing, a second housing, a hinge device, and a flexible display. The hinge device foldably combines the first housing and the second housing and includes a hinge module, a first hinge plate corresponding to the first housing and connected to the hinge module, and a second hinge plate corresponding to the second housing and connected to the hinge module. The flexible display is disposed to be supported by the first housing, the first hinge plate, the second housing, and the second hinge plate, has a folding region folded through the hinge module, a first bending region located at one side of the folding region, and a second bending region located on other side of the folding region, and includes a window layer, a display panel disposed under the window layer, and a support plate disposed under the display panel and including a pattern having at least one opening and/or at least one recess formed at a position corresponding to at least the folding region. The first bending region and the second bending region include a reverse bending section bent with a curvature greater than a curvature of the folding region and bent in a direction opposite to a bending direction of the folding region when the electronic device is in a folded state. The first bending region is configured to refrain from being attached to the first housing and the first hinge plate, and the second bending region is configured to refrain from being attached to the second housing and the second hinge plate. The support plate maintains a specific thickness in a portion corresponding to the first bending region and the second bending region.

According to various embodiments, an electronic device includes a first housing, a second housing, a hinge device, a flexible display, a digitizer, and a reinforcing plate. The hinge device foldably combines the first housing and the second housing. The flexible display is disposed to be supported by the first housing and the second housing, has a folding region folded through the hinge device, a first bending region located at one side of the folding region, and a second bending region located on other side of the folding region, and includes a window layer, a display panel disposed under the window layer, and a support plate disposed under the display panel and including a pattern having at least one opening and/or at least one recess formed at a position corresponding to at least the folding region. The first bending region and the second bending region include a reverse bending section bent with a curvature greater than a curvature of the folding region and bent in a direction opposite to a bending direction of the folding region when the electronic device is in a folded state. The digitizer is disposed under the support plate, and the reinforcing plate is disposed under the digitizer. The reinforcing plate may include a second pattern having at least one opening and/or at least one recess formed in a portion corresponding to at least the folding region.

### [Advantageous Effects]

The electronic device according to embodiments of the disclosure includes a bendability improving structure provided in a portion corresponding to the first and second bending regions of the flexible display that are reversely bent in the folded state, thereby improving the excellent surface quality of the flexible display even in frequent folding operations. In addition, while the bendability improving structure for the first and second bending regions that are reversely bent in the folded state is provided, a structure for improving a supporting force for supporting the flexible display is considered to help to reinforce the rigidity of the electronic device. In addition, while the bendability improving structure for the first and second bending regions that are reversely bent in the folded state is provided, an anti-interference structure for the detachable digitizer is provided to help to improve the operational reliability of the electronic device.

In addition, various effects explicitly or implicitly appreciated through the disclosure may be provided.

### [Description of Drawings]

In connection with the description of the drawings, the same or similar reference numerals may be used for the same or similar components.
FIGS. 1A and 1B are front and rear views of an electronic device in an unfolded state according to various embodiments of the disclosure.
FIGS. 2A and 2B are front and rear views of an electronic device in a folded state according to various embodiments of the disclosure.
FIG 3 is an exploded perspective view of an electronic device according to various embodiments of the disclosure.
FIG 4 is an exploded perspective view of a first display according to various embodiments of the disclosure.
FIG 5A is a partial configuration view of an electronic device illustrating an arrangement structure of a hinge device according to various embodiments of the disclosure.
FIG 5B is a partial perspective view of an electronic device showing a state in which a flexible display is folded through a hinge device according to various embodiments of the disclosure.
FIG 6 is a partial cross-sectional view of an electronic device taken along the line 6-6 of FIG 1A according to various embodiments of the disclosure.
FIGS. 7 to 9 are partial cross-sectional views of an electronic device according to various embodiments of the disclosure.
FIGS. 10A to 10E are partial cross-sectional views of an electronic device including a reinforcing plate having various shapes according to various embodiments of the disclosure.
FIG 11A is a partial cross-sectional view of an electronic device according to various embodiments of the disclosure.
FIG 11B is a partial cross-sectional view of an electronic device according to various embodiments of the disclosure.
FIGS. 12A to 12D are views illustrating various patterns to be replaced with the recess formed in the region 12 of the support plate of FIG 11A according to various embodiments of the disclosure.
FIGS. 13A to 13C are views illustrating various recesses to be replaced with the first pattern disposed in the region 13 of FIG 11A according to various embodiments of the disclosure.
FIG 14A is a partial cross-sectional view of an electronic device including a protection plate according to various embodiments of the disclosure.
FIGS. 14B and 14C are partial cross-sectional views illustrating an attachment structure of a protection plate in a folded state of an electronic device according to various embodiments of the disclosure.
FIG 14D is a view illustrating a state in which a protection plate is guided to a hinge plate through a guide member according to various embodiments of the disclosure.
FIG 14E is a cross-sectional view taken along the line 14e-14e of FIG 14D according to various embodiments of the disclosure.

### [Mode for Disclosure]

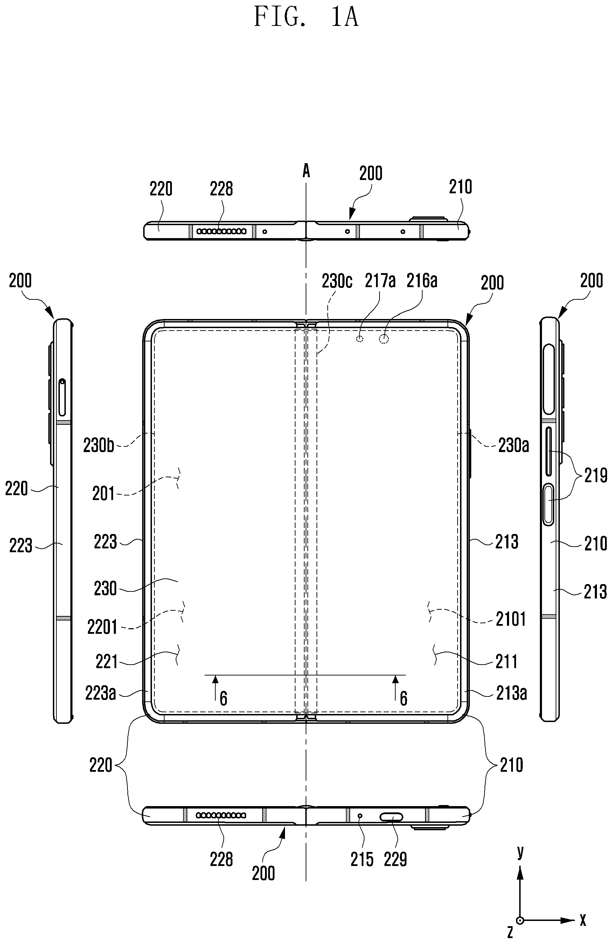

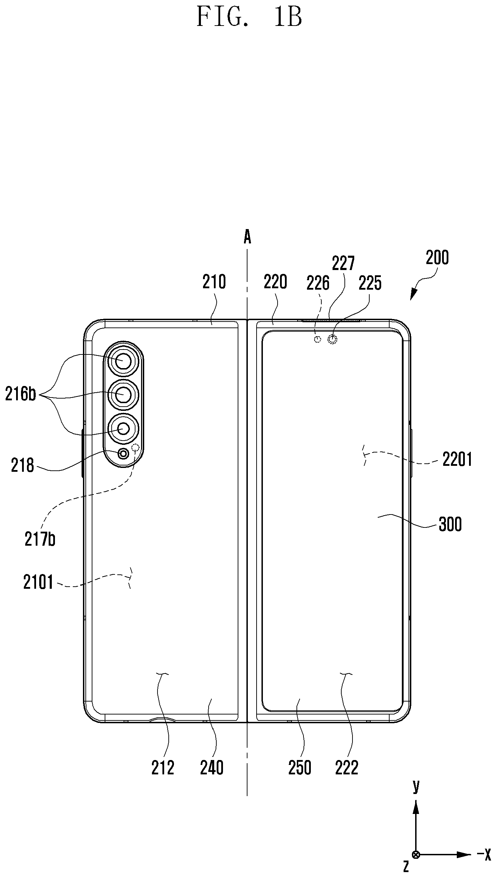

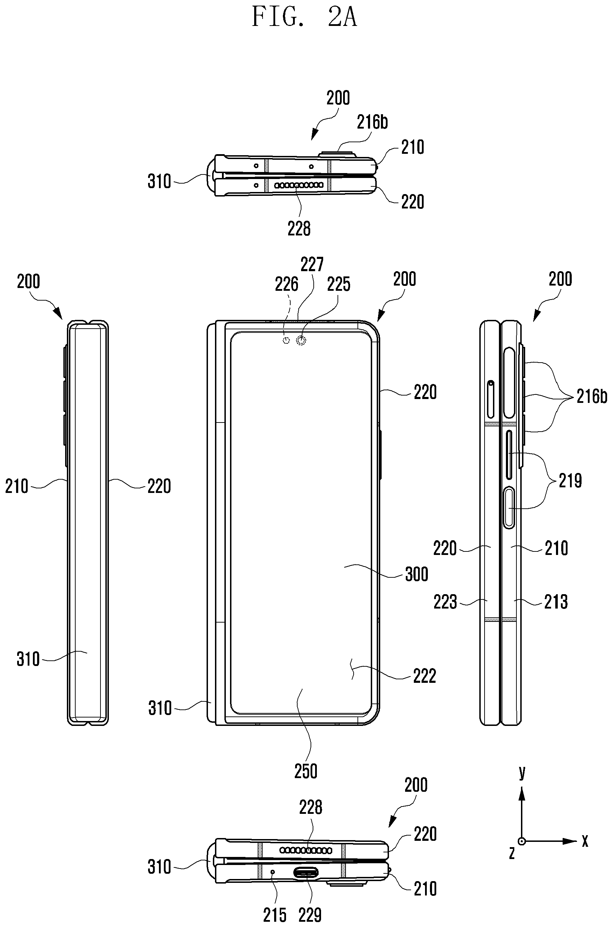

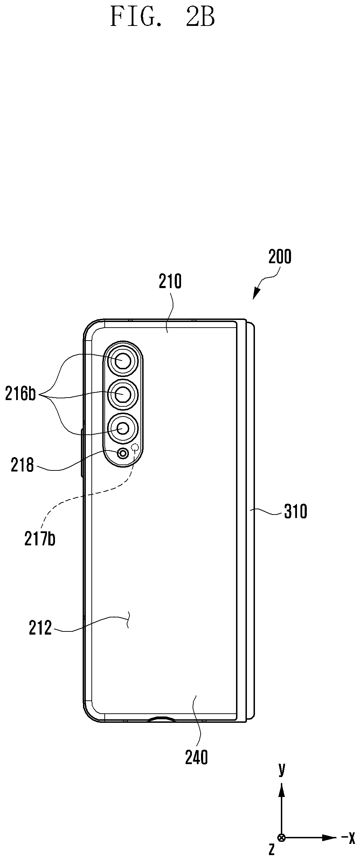

FIGS. 1A and 1B are diagrams illustrating a front view and a rear view, respectively, of an unfolded stateof an electronic device according to various embodiments. FIGS. 2A and 2B are diagrams illustrating a front view and a rear view, respectively, of a folded state of an electronic device according to various embodiments.

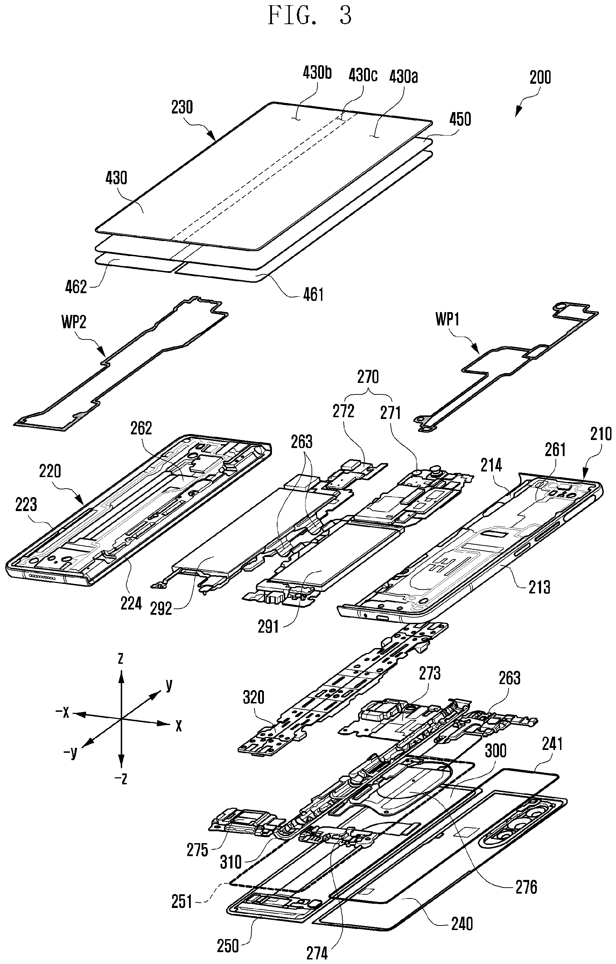

Referring to FIGS. 1A, 1B, 2A and 2B (which may be referred to as FIGS. 1A to 2B), an electronic device 200 may include a pair of housings 210 and 220 (e.g., a foldable housing structure) rotatably coupled to each other with reference to folding axis A through a hinge device (e.g., a hinge device 320 of FIG 3) (e.g., a hinge module) so as to be folded with respect to each other, a first display 230 (e.g., a flexible display, a foldable display, or a main display) disposed through the pair of housings 210 and 220, and/or a second display 300 (e.g., a sub display) disposed through the second housing 220. According to an embodiment, at least a part of the hinge device (e.g., the hinge device 320 of FIG 3) may be disposed so as not to be seen from the outside through the first housing 210 and the second housing 220, and may be disposed so as not to be seen from the outside through the hinge housing 310 covering a foldable portion. According to an embodiment, the hinge device 320 may include a hinge module including a gear assembly including multiple gears and multiple hinge cams which are coupled to hinge shafts rotating through the gear assembly and perform a cam interlocking operation, and hinge plates for connecting the hinge model to the first housing 210 and the second housing 220. In the disclosure, a surface in which the first display 230 is disposed may be defined as a front surface of the electronic device 200, and a surface opposite to the front surface may be defined as a rear surface of the electronic device 200. In addition, a surface surrounding a space between the front surface and the rear surface may be defined as a side surface of the electronic device 200.

According to various embodiments, the pair of housings 210 and 220 may include a first housing 210 and a second housing 220 foldably arranged with respect to each other through the hinge device (e.g., the hinge device 320 of FIG 3). According to an embodiment, the shape and the coupling of the pair of housings 210 and 220 are not limited to those illustrated in FIGS. 1A to 2B, and the pair of housings 210 and 220 may be implemented by a combination and/or coupling of other shapes or components. According to an embodiment, the first housing 210 and the second housing 220 may be arranged on opposite sides with reference to the folding axis A, and may have shapes that are entirely symmetric to each other with respect to the folding axis A. According to an embodiment, the first housing 210 and the second housing 220 may be asymmetrically folded with reference to the folding axis A. According to an embodiment, the angle or the distance between the first housing 210 and the second housing 220 may vary depending on whether the electronic device 200 is in an unfolded state, a folded state, or an intermediate state.

According to various embodiments, the first housing 210 may include, in the unfolded state of the electronic device 200, a first surface 211 connected to the hinge device (e.g., the hinge device 320 of FIG 3) and disposed to be oriented to the front surface of the electronic device 200, a second surface 212 oriented in a direction opposite to the first surface 211, and/or a first side member 213 surrounding at least a part of a first space between the first surface 211 and the second surface 212. According to an embodiment, the second housing 220 may include, in the unfolded state of the electronic device 200, a third surface 221 connected to the hinge device (e.g., the hinge device 320 of FIG 3) and disposed to be oriented to the front surface of the electronic device 200, a fourth surface 222 oriented in a direction opposite to the third surface 221, and/or a second side member 223 surrounding at least a part of a second space between the third surface 221 and the fourth surface 222. According to an embodiment, the first surface 211 and the third surface 221 may be oriented in substantially the same direction in the unfolded state, and the first surface 211 and the third surface 221 may at least partially face each other in the folded state. According to an embodiment, the electronic device 200 may include a recess 201 formed to receive the first display 230 through structural coupling of the first housing 210 and the second housing 220. According to an embodiment, the recess 201 may have substantially the same shape as the first display 230. According to an embodiment, the first housing 210 may include a first protection frame 213a (e.g., a first decoration member) which is, when seen from above the first display 230, coupled to the first side member 213, disposed to overlap with an edge of the first display 230, so as to cover the edge of the first display 230 to allow the same not to be seen from the outside. According to an embodiment, the first protection frame 213a may be integrally formed with the first side member 213. According to an embodiment, the second housing 220 may include a second protection frame 223a (e.g., a second decoration member) which is, when seen from above the first display 230, coupled to the second side member 223, disposed to overlap with an edge of the first display 230, so as to cover the edge of the first display 230 to allow the same not to be seen from the outside. According to an embodiment, the second protection frame 223a may be integrally formed with the first side member 223. In an embodiment, the first protection frame 213a and the second protection frame 223a may be omitted.

According to various embodiments, the hinge housing 310 (e.g., a hinge cover) may be disposed between the first housing 210 and the second housing 220, and may be disposed to cover a part (e.g., at least one hinge module) of the hinge device (e.g., the hinge device 320 of FIG 3) disposed on the hinge housing 310. According to an embodiment, the hinge housing 310 may be hidden or exposed from or to the outside by a part of the first housing 210 and the second housing 220 according to the unfolded state, the folded state, or the intermediate state of the electronic device 200. For example, when the electronic device 200 is in the unfolded state, at least a part of the hinge housing 310 may be covered by the first housing 210 and the second housing 220 and not be substantially exposed. According to an embodiment, when the electronic device 200 is in the folded state, at least a part of the hinge housing 310 may be exposed to the outside between the first housing 210 and the second housing 220. According to an embodiment, in the intermediate state in which the first housing 210 and the second housing 220 are folded with each other by a predetermined angle (folded with a certain angle), the hinge housing 310 may be at least partially exposed to the outside of the electronic device 200 between the first housing 210 and the second housing 220. For example, an area in which the hinge housing 310 is exposed to the outside, may be smaller than that in a case in which the electronic device 200 is completely folded. According to an embodiment, the hinge housing 310 may include a curved surface.

According to various embodiments, when the electronic device 200 is in the unfolded state (e.g., the states shown in FIGS. 1A and 1B), the first housing 210 and the second housing 220 may meet at an about 180-degree angle, and a first area 230a, a second area 230b, and a folding area 230c of the first display 230 may form the same plane and arranged to be oriented in substantially the same direction (e.g., a z-axis direction). In an embodiment, when the electronic device 200 is in the unfolded state, the first housing 210 may rotate by an about 360-degree angle with respect to the second housing 220, and may be outwardly folded (an out-folding scheme) so that the second surface 212 and the fourth surface 222 face each other.

According to various embodiments, when the electronic device 200 is in the folded state (e.g., the states shown in FIGS. 2A and 2B), the first surface 211 of the first housing 210 and the third surface 221 of the second housing 220 may be arranged to face each other. In this case, the first area 230a and the second area 230b of the first display 230 may form a narrow angle (e.g., a range between 0 degrees to about 10 degrees) through the folding area 230c, and may be arranged to face each other. According to an embodiment, at least a part of the folding area 230c may be deformed into a curved shape having a predetermined curvature. According to an embodiment, when the electronic device 200 is in the intermediate state, the first housing 210 and the second housing 220 may be arranged at a predetermined angle (a certain angle). In this case, the first area 230a and the second area 230b of the first display 230 may form an angle that is greater than that in the folded state and smaller than that in the unfolded state, and the curvature of the folding area 230c may be lower than that in the folded state, and may be higher than that in the unfolded state. In an embodiment, the first housing 210 and the second housing 220 may form an angle which allows stopping at a designated folding angle between the folded state and the unfolded state (a free stop function), through the hinge device (e.g., the hinge device 320 of FIG 3). In an embodiment, the first housing 210 and the second housing 220 may continuously operate while being pressed in an unfolding direction or a folding direction with reference to a designated inflection angle, through the hinge device (e.g., the hinge device 320 of FIG 3).

According to various embodiments, the electronic device 200 may include at least one of at least one display 230 and 300 disposed on the first housing 210 and/or the second housing 220, an input device 215, sound output devices 227 and 228, sensor modules 217a, 217b, and 226, camera modules 216a, 216b, and 225, a key input device 219, an indicator (not shown), or a connector port 229. In an embodiment, the electronic device 200 may omit at least one of the elements, or may additionally include at least one another element.

According to various embodiments, the at least one display 230 and 300 may include a first display 230 (e.g., a flexible display) disposed to be supported by the third surface 221 of the second housing 220 from the first surface 211 of the first housing 210 through the hinge device (e.g., the hinge device 320 of FIG 3), and a second display 300 disposed to be at least partially seen from the outside through the fourth surface 222 in a space in the second housing 220. In an embodiment, the second display 300 may be disposed to be seen from the outside through the second surface 212 in a space in the first housing 210. According to an embodiment, the first display 230 may be mainly used in the unfolded state of the electronic device 200, and the second display 300 may be mainly used in the folded state of the electronic device 200. According to an embodiment, the electronic device 200 may control, in the intermediate state, the first display 230 and/or the second display 300 to be used, based on a folding angle between the first housing 210 and the second housing 220.

According to various embodiments, the first display 230 may be disposed in a receiving space formed by the pair of housings 210 and 220. For example, the first display 200 may be disposed in a recess 201 formed by the pair of housings 210 and 220, and may be disposed to occupy substantially the most of the front surface of the electronic device 200in the unfolded state. According to an embodiment, the first display 230 may include a flexible display having at least one area which can be deformed into a plane or a curved surface. According to an embodiment, the first display 230 may include the first area 230a facing the first housing 210 and the second area 230b facing the second housing 220. According to an embodiment, the first display 230 may include the folding area 230c including a part of the first area 230a and a part of the second area 230b with respect to the folding axis A. According to an embodiment, at least a part of the folding area 230c may include an area corresponding to the hinge device (e.g., the hinge device 320 of FIG 3). According to an embodiment, a division of an area of the first display 230 merely corresponds to an example physical division by the pair of housings 210 and 220 and the hinge device (e.g., the hinge device 320 of FIG 3), and the first display 230 may be substantially displayed as one seamless full screen through the pair of the housings 210 and 220 and the hinge device (e.g., the hinge device 320 of FIG 3). According to an embodiment, the first area 230a and the second area 230b may have shapes that are entirely symmetric or partially asymmetric to each other with respect to the folding area 230c.

According to various embodiments, the electronic device 200 may include a first rear cover 240 disposed on the second surface 212 of the first housing 210 and a second rear cover 250 disposed on the fourth surface 222 of the second housing 220. In an embodiment, at least a part of the first rear cover 240 may be integrally formed with the first side member 213. In an embodiment, at least a part of the second rear cover 250 may be integrally formed with the second side member 223. According to an embodiment, at least one of the first rear cover 240 and the second rear cover 250 may be substantially formed of a transparent plate (e.g., a polymer plate or glass plate including various coding layers) or an opaque plate. According to an embodiment, the first rear cover 240 may be formed of, for example, an opaque plate such as coded or colored glass, ceramic, polymer, metal (e.g., aluminum, stainless steel (STS), or magnesium), or a combination of at least two of the materials above. According to an embodiment, the second rear cover 250 may be substantially formed of, for example, a transparent plate such as glass or polymer. Accordingly, the second display 300 may be disposed to be seen from the outside through the second rear cover 250 in a space in the second housing 220.

According to various embodiments, the input device 215 may include a microphone. In an embodiment, the input device 215 may include multiple microphones arranged to detect the direction of sound. According to an embodiment, the sound output devices 227 and 228 may include speakers. According to an embodiment, the sound output devices 227 and 228 may include a call receiver 227 disposed through the fourth surface 222 of the second housing 220 and an external speaker 228 disposed through at least a part of the second side member 223 of the second housing 220. In an embodiment, the input device 215, the sound output devices 227 and 228, and the connector 229 may be disposed in spaces of the first housing 210 and/or the second housing 220, and may be exposed to an external environment through at least one hole formed through the first housing 210 and/or the second housing 220. In an embodiment, holes formed through the first housing 210 and/or the second housing 220 may be commonly used for the input device 215 and the sound output devices 227 and 228. In an embodiment, the sound output devices 227 and 228 may include a speaker (e.g., a piezo speaker) operating without including a hole formed through the first housing 210 and/or the second housing 220.

According to various embodiments, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. According to an embodiment, the electronic device 200 may include a flash 218 disposed around the second camera module 216b. According to an embodiment, the flash 218 may include, for example, a light-emitting diode or a xenon lamp. According to an embodiment, the camera modules 216a, 216b, and 225 may include one or multiple lenses, an image sensor, and/or an image signal processor. In an embodiment, at least one of the camera modules 216a, 216b, and 225 may include two or more lenses (e.g., wide-angle and telephoto lenses) and image sensors, and may be arranged together on one surface of the first housing 210 and/or the second housing 220.

According to various embodiments, the sensor modules 217a, 217b, and 226 may generate a data value or an electrical signal corresponding to an internal operational state or an external environmental state of the electronic device 200.According to an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In an embodiment, the sensor modules 217a, 217b, and 226 may include at least one of a gesture sensor, a grip sensor, a color sensor, an infrared (IR) sensor, an illuminance sensor, an ultrasonic sensor, an iris recognition sensor, or a distance detection sensor (e.g., a time of flight (TOF) sensor or a light detection and ranging (LiDAR)).

According to various embodiments, the electronic device 200 may further include an unillustrated sensor module, for example, at least one of an atmospheric sensor, a magnetic sensor, a biometric sensor, a temperature sensor, a humidity sensor, or a fingerprint recognition sensor. In an embodiment, the fingerprint recognition sensor may be disposed through at least one of the first side member 213 of the first housing 210 and/or the second side member 223 of the second housing 220.

According to various embodiments, the key input device 219 may be disposed to be exposed to the outside through the first side member 213 of the first housing 210. In an embodiment, the key input device 219 may be disposed to be exposed to the outside through the second side member 223 of the second housing 220. In an embodiment, the electronic device 200 may not include some or all of the key input device 219, and the unincluded key input device 219 may be implemented in another shape such as a soft key on the least one display 230 and 300. In an embodiment, the key input device 219 may be implemented using a pressure sensor included in the at least one display 230 and 300.

According to various embodiments, the connector port 229 may include a connector (e.g., a USB connector or an IF module (an interface connector port module)) for transmitting or receiving data and/or power to and/or from an external electronic device. In an embodiment, the connector port 229 may perform a function of transmitting or receiving an audio signal to or from the external electronic device together, or may further include a separate connector port (e.g., an ear jack hole) for performing a function of transmitting or receiving an audio signal to or from the external electronic device.

According to various embodiments, at least one camera modules 216a and 225 of the camera modules 216a, 216b, and 225, at least one sensor module 217a and 226 of the sensor modules 217a, 217b, and 226, and/or an indicator may be arranged to be exposed through the at least one display 230 and 300. For example, the at least one camera modules 216a and 225, the at least one sensor module 217a and 226, and/or the indicator may be arranged under an activated area (a display area) of the at least one display 230 and 300 in a space in the at least one housing 210 and 220, and may be arranged to come into contact with an external environment through a transparent area or an opening that is perforated to a cover member (e.g., a window layer (not shown) of the first display 230 and/or the second rear cover 250). According to an embodiment, an area in which the at least one display 230 and 300 and the at least one camera module 216a and 225 face each other may be formed as a transmission area having a predetermined transmission ratio, as a part of an area in which a content is displayed. According to an embodiment, the transmission area may be formed to have a transmission ratio in the range of about 5% to about 20%. The transmission area may include an area overlapping with an effective area (e.g., an angle of view area) of the at least one camera module 216a and 225, wherein an image is formed on the image sensor in the effective area, and light for generating an image passes through the effective area. For example, the transmission area of the display 230 and 300 may include an area in which the density of a pixel is lower than that in a surrounding area. For example, the transmission area may be replaced with an opening. For example, the at least one camera module 216a and 225 may include an under-display camera (UDC) or an under-panel camera (UPC). In an embodiment, some camera modules or sensor modules 271a and 226 may be arranged to perform functions thereof without being visually exposed through the display. For example, an area facing the sensor module 217a and 226 and/or the camera module 216a and 225 arranged under the display 230 and 300 (e.g., a display panel) corresponds to an under-display camera (UDC) structure, and a perforated opening is not necessarily required.

FIG 3 is an exploded perspective view illustrating an electronic device 200 according to various embodiments.

Referring to FIG 3, the electronic device 200 may include a first display 230 (e.g., a flexible display), a second display 300, a hinge device 320, a pair of support members 261 and 262, at least one substrate 270 (e.g., a printed circuit board (PCB)), a first housing 210, a second housing 220, a first rear cover 240, and/or a second rear cover 250.

According to various embodiments, the first display 230 may include a display panel 430 (e.g., a flexible display panel), a support plate 450 disposed under the display panel 430, and a pair of reinforced plates 461 and 462 arranged under the support plate 450. According to an embodiment, the display panel 430 may include a first panel area 430a corresponding to a first area (e.g., the first area 230a of FIG 1A) of the first display 230, a second panel area 430b extending from the first panel area 430a and corresponding to a second area (e.g., the second area 230b of FIG 1A) of the first display 230, and a third panel area 430c for connecting the first panel area 430a and the second panel area 430b and corresponding to a folding area (e.g., the folding area 230c of FIG 1A) of the first display 230. According to an embodiment, the support plate 450 may be disposed between the display panel 430 and the pair of support members 261 and 262 and may be formed to have a material and a shape for providing a planar support structure for the first panel area 430a and the second panel area 430b and a bendable structure for assisting in the flexibility of the third panel area 430c. According to an embodiment, the support plate 450 may be formed of a conductive material (e.g., metal) or a non-conductive material (e.g., polymer or fiber reinforced plastic (FRP)). According to an embodiment, the pair of reinforced plates 461 and 462 may include, between the support plate 450 and the pair of support members 261 and 262, a first reinforced plate 461 disposed to correspond to at least a part of the first panel 430a and the third panel area 430c, and a second reinforced plate 462 disposed to correspond to at least a part of the second panel area 460b and the third panel area 430c. According to an embodiment, the pair of reinforced plates 461 and 462 may be formed of metal materials (e.g., SUS), and may thus assist in reinforcing of the rigidity and a ground connection structure for the first display 230.

According to various embodiments, the second display 300 may be disposed in a space between the second housing 220 and the second rear cover 250. According to an embodiment, the second display 300 may be disposed in a space between the second housing 220 and the second rear cover 250 so as to allow the second display 300 to be seen from the outside through substantially the entire area of the second rear cover 250.

According to various embodiments, at least a part of the first support member 261 may be bendably coupled to the second support member 262 through the hinge device 320. According to an embodiment, the electronic device 200 may include at least one wire member 263 (e.g., a flexible printed circuit board (FPCB)) disposed from at least a part of the first support member 261 to a part of the second support member 262 by crossing the hinge device 320. According to an embodiment, the first support member 261 may be disposed by extending from the first side member 213 or structurally coupled to the first side member 213. According to an embodiment, the electronic device 200 may include a first space (e.g., a first space 2101 of FIG 1A) provided through the first support member 261 and the first rear cover 240. According to an embodiment, the first housing 210 (e.g., a first housing structure) may be configured by coupling of the first side member 213, the first support member 261, and the first rear cover 240. According to an embodiment, the second support member 262 may be disposed by extending from the second side member 223 or structurally coupled to the second side member 223. According to an embodiment, the electronic device 200 may include a second space (e.g., a second space 2201 of FIG 1A) provided through the second support member 262 and the second rear cover 250. According to an embodiment, the second housing 220 (e.g., a second housing structure) may be configured through coupling of the second side member 223, the second support member 262, and the second rear cover 250. According to an embodiment, at least a part of the hinge device 320 and/or the at least one wire member 263 may be disposed to be supported through at least a part of the pair of support members 261 and 262. According to an embodiment, the at least one wire member 263 may be disposed in a direction (e.g., an x-axis direction) crossing the first support member 261 and the second support member 262. According to an embodiment, the at least one wire member 263 may be disposed in a direction (e.g., an x-axis direction) substantially perpendicular to a folding axis (e.g., a y-axis or the folding axis A of FIG 1A).

According to various embodiments, the at least one substrate 270 may include a first substrate 271 disposed in the first space 2101 and a second substrate 272 disposed in the second space 2201. According to an embodiment, the first substrate 271 and the second substrate 272 may include multiple electronic components arranged to implement various functions of the electronic device 200. According to an embodiment, the first substrate 271 and the second substrate 272 may be electrically connected to each other through the at least one wire member 263.

According to various embodiments, the electronic device 200 may include at least one battery 291 and 292. According to an embodiment, the at least one battery 291 and 292 may include a first battery 291 disposed in the first space 2101 of the first housing 210 and electrically connected to the first substrate 271, and a second battery disposed in the second space 2201 of the second housing 220 and electrically connected to the second substrate 272. According to an embodiment, the first support member 261 and the second support member 262 may further include at least one swelling hole for the first battery 291 and the second battery 292.

According to various embodiments, the first housing 210 may include a first rotation support surface 214, and the second housing 220 may include a second rotation support surface 224 corresponding to the first rotation support surface 214. According to an embodiment, the first rotation support surface 214 and the second rotation support surface 224 may include a curved surface (seamlessly connected) corresponding to an external surface of a curved shape of the hinge housing 310. According to an embodiment, when the electronic device 200 is in the unfolded state, the first rotation support surface 214 and the second rotation support surface 224 may hide the hinge housing 310 not to expose the hinge housing 310 through the rear surface of the electronic device 200 or to expose only a part thereof. According to an embodiment, when the electronic device 200 in the folded state, the first rotation support surface 214 and the second rotation support surface 224 may be at least partially expose the hinge housing 310 through the rear surface of the electronic device 200 as the curved shape of the hinge housing 310 rotates along an external surface.

According to various embodiments, the electronic device 200 may include at least one antenna 276 disposed in the first space 2201. According to an embodiment, the at least one antenna 276 may be disposed on the first battery 291 and the first rear cover 240 in the first space 2201. According to an embodiment, the at least one antenna 276 may include, for example, a near-field communication (NFC) antenna, a wireless charging antenna, and/or a magnetic secure transmission (MST) antenna. According to an embodiment, the at least one antenna 276 may perform, for example, short-distance communication with an external device, or wirelessly transmit or receive power required for charging. In an embodiment, an antenna structure may be formed by at least a part of the first side member 213 or the second side member 223 and/or a part or a combination of the first support member 261 and the second support member 262.

According to various embodiments, the electronic device 200 may further include at least one electronic component assembly 274 and 275 and/or additional support members 263 and 273 disposed in the first space 2101 and/or the second space 2201. For example, the at least one electronic component assembly may include an interface connector port assembly 274 or the speaker assembly 275.

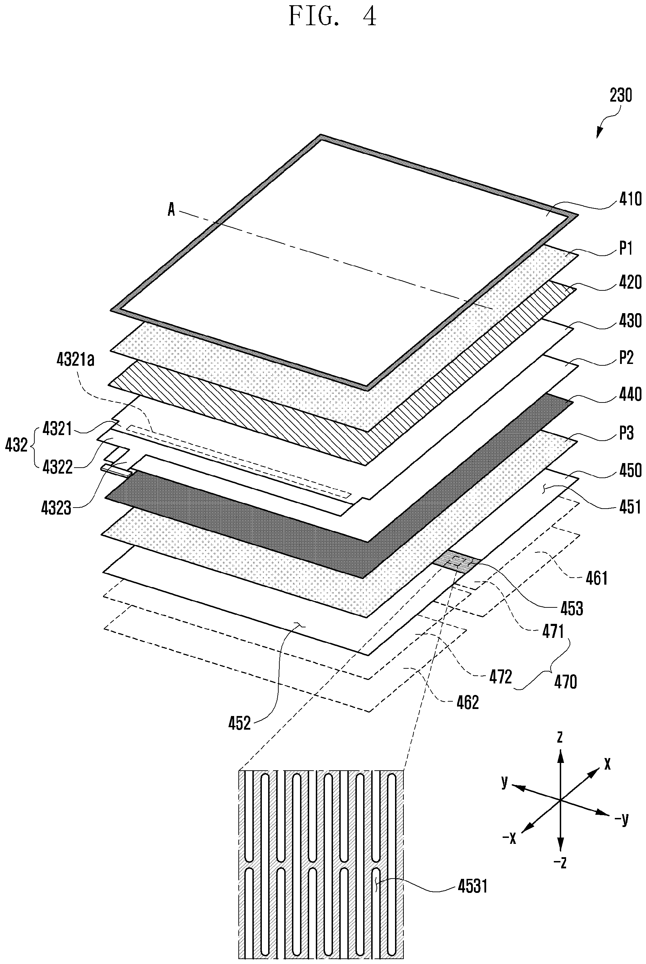

According to various embodiments, the electronic device 200 may include a first waterproof member WP1 disposed between the first reinforcing plate 461 and the first support member 261, and a second waterproof member WP2 disposed between the second reinforcing plate 462 and the second support member 262. According to an embodiment, the first waterproof member WP1 may provide at least one first waterproof space between the first reinforcing plate 461 and the first support member 261. According to an embodiment, the at least one first waterproof space may accommodate a corresponding portion of at least one electronic component (e.g., a camera module or a sensor module) disposed to be supported by the first support member 261. According to an embodiment, the second waterproof member WP2 may provide at least one second waterproof space between the second reinforcing plate 462 and the second support member 262. According to an embodiment, the at least one second waterproof space may accommodate at least a part of a bending portion (e.g., the bending portion 432 in FIG 4) that is folded toward the rear surface of the first display 230. For example, at least one second waterproof space may be disposed to surround at least a part of the bending portion 432 that extends from a display panel (e.g., the display panel 430 in FIG 4) of the first display 230 and is folded to the rear surface. Therefore, a control circuit (e.g., the control circuit 4321a in FIG 4) and a plurality of electric elements (not shown) disposed in the bending portion 432 are disposed in the at least one second waterproof space, thereby being protected from external moisture and/or foreign substances.

According to various embodiments, the electronic device 200 may include a waterproof tape 241 disposed between the first rear surface cover 240 and the first housing 210. According to an embodiment, the electronic device 200 may include a bonding member 251 disposed between the second rear surface cover 250 and the second housing 220. In some embodiment, the bonding member 251 may be disposed between the second display 300 and the second housing 220. In some embodiment, the waterproof tape 241 may be replaced with the bonding member 251, and the bonding member 251 may be replaced with the waterproof tape 241.

FIG 4 is an exploded perspective view of a first display according to various embodiments of the disclosure. Hereinafter, the first display will be referred to as a 'flexible display'.

The flexible display (e.g., the first display 230 in FIG 3) according to embodiments of the disclosure may include an unbreakable (UB) type OLED display (e.g., a curved display). However, the flexible display 230is not limited tothe above and may include a flat type display of anOCTA (on cell touch AMOLED (active matrix organic light-emitting diode) scheme.

With reference to FIG 4, the flexible display 230 may include a window layer 410 and also include a polarizer (POL) 420 (e.g., a polarizing film), a display panel 430, a polymer layer 440, a support plate 450, and reinforcing plates 461 and 462, which are sequentially disposed on the rear surface (e.g.,the negative z-axis direction) of the window layer 410. In some embodiment, the flexible display 230 may include a window layer 410 and also include a polarizer (POL) 420 (e.g., a polarizing film), a display panel 430, a polymer layer 440, a support plate 450, and reinforcing plates 461 and 462, which are directly sequentially disposed on the rear surface (e.g., the negative z-axis direction) of the window layer 410 and each other in the order stacked. In some embodiment, the flexible display 230 may include a digitizer 470 disposed between the support plate 450 and the reinforcing plates 461 and 462. In some embodiment, the digitizer 470 may be disposed between the polymer layer 440 and the support plate 450. For example, in the case that the flexible display 230 is a POL-less display, the polarizer may be omitted, and a transparent reinforcing layer (e.g., a buffer layer) may be further disposed at that position.

According to various embodiments, the window layer 410 may include a glass layer. According to an embodiment, the window layer 410 may include ultra-thin glass (UTG). In some embodiment, the window layer 410 may include a polymer. In this case, the window layer 410 may include polyethylene terephthalate (PET) or polyimide (PI). In some embodiment, the window layer 410 may be arranged in multiple layers to include a glass layer and a polymer. In some embodiment, the flexible display 230 may further include a coating layer formed on at least a part of the upper, rear, or side surfaces of the glass layer formed as a part of the window layer 410 or the polymer (e.g., a protective film layer) disposed on the glass layer. In this case, the coating layer may include a hard coating (HC) layer, an antireflection (AR)/low reflection (LR) coating layer, a shatter proof (SP) coating layer, an antifingerprint (AF) coating layer, or the like. In some embodiment, the coating layer may be formed between the polymer and the glass layer, on the side of the polymer, and/or on the rear or side surface of the glass layer.

According to various embodiments, the window layer 410, the polarizer 420, the display panel 430, the polymer layer 440, and the support plate 450 may be disposed to cross at least a part of a first surface (e.g., the first surface 211 in FIG 1A) of a first housing (e.g., the first housing 210 in FIG 1A)and a third surface(e.g., the third surface 221 in FIG 1A)of a second housing (e.g., the second housing 220 in FIG 1A). According to an embodiment, the reinforcing plates 461 and 462 may include a first reinforcing plate 461 corresponding to the first housing (e.g., the first housing 210 in FIG 1A) and a second reinforcing plate 462 corresponding to the second housing (e.g., the second housing 220 in FIG 1A). According to an embodiment, the reinforcing plates 461 and 462 may provide rigidity for the flexible display 230 and may be used as a ground for preventing malfunction of the flexible display 230. According to an embodiment, the reinforcing plates 461 and 462 may be formed of a metal material. According to an embodiment, the reinforcing plates 461 and 462 may be formed of SUS or Al. According to an embodiment, the window layer 410, the polarizer 420, the display panel 430, the polymer layer 440, the support plate 450, and the reinforcing plates 461 and 462 may be attached to each other through adhesives P1, P2, and P3. For example, the adhesives P1, P2, and P3 may include at least one of an optical clear adhesive (OCA), a pressure sensitive adhesive (PSA), a heat-reactive adhesive, a general adhesive, or a doublesided tape.

According to various embodiments, the display panel 430 may include a plurality of pixels and a wiring structure (e.g., an electrode pattern). According to an embodiment, the polarizer 420 may selectively pass light generated from a light source of the display panel 430 and vibrating in a certain direction. According to an embodiment, the display panel 430 and the polarizer 420 may be integrally formed. According to an embodiment, the flexible display 230 may include a touch panel (not shown).

According to various embodiments, the polymer layer 440 may be disposed under the display panel 430 to provide a dark background for ensuring the visibility of the display panel 430 and be formed of a buffering material for a buffering action. In some embodiment, to waterproof the flexible display 230, the polymer layer 440 may be removed or disposed under the support plate 450. In some embodiment, the polymer layer 440 may be omitted when the support plate is formed of an opaque material.

According to various embodiments, the support plate 450 may provide bending characteristics to the flexible display 230. For example, the support plate 450may be formed of a non-metallic thin plate-type material such as fiber reinforced plastics (FRP) (e.g., carbon fiber reinforced plastics (CFRP) or glass fiber reinforced plastics (GFRP))having rigid characteristics for supporting the display panel 430. According to an embodiment, the support plate 450 may include a first flat portion 451 corresponding to the first housing (e.g., the first housing 210 in FIG 1A), a second flat portion 452 corresponding to the second housing (e.g., the second housing 220 in FIG 1A), and a flexible portion 453 (or a bending portion) connecting the first flat portion 451 and the second flat portion 452. According to an embodiment, the flexible portion 453 may be formed to have a first pattern 4531 for improving bendability. According to an embodiment, the first pattern 4531 may have a plurality of openings formed to penetrate from the first surface to the second surface of the support plate at predetermined intervals. According to an embodiment, the bending characteristics of the flexible portion 453 may be determined through at least one of the size, shape, or arrangement density of at least some of the plurality of openings of the first pattern 4531. In some embodiment, the support plate 450 may be formed of a metal material such as steel use stainless (SUS) (e.g., stainless steel (STS)), Cu, Al, or metal clad (e.g., a laminated member in which SUS and Al are alternately disposed). In this case, the support plate 450 may have a plurality of openings formed throughout the entire area thereof so that a detection operation of the digitizer 470 disposed below is induced. According to an embodiment, the support plate 450 may help to reinforce the rigidity of the electronic device (e.g., the electronic device 200 in FIG 1A) and be used to shield ambient noise and dissipate heat from surrounding heat-generating components.

According to various embodiments, the display 230 may include the digitizer 470 as a detecting member that is disposed under the support plate 450 and receives an input of an electronic pen (e.g., a stylus). According to an embodiment, the digitizer 470 may include coil members disposed on a dielectric substrate (e.g., a dielectric film or a dielectric sheet) to detect a resonant frequency of an electromagnetic induction scheme applied from the electronic pen. According to an embodiment, the digitizer 470 may include a first digitizer 471 corresponding to the first housing (e.g., the first housing 210 in FIG 1A) and a second digitizer 472 corresponding to the second housing (e.g., the second housing 220 in FIG 1A). According to an embodiment, the first digitizer 471 and the second digitizer 472 may beelectrically connected to the substrates (e.g.,the substrates 271 and 272in FIG 3) of the electronic device (e.g., the electronic device 200 in FIG 3) through FPCB, respectively, thereby operating as a single digitizer. In some embodiment, the first digitizer 471 and the second digitizer 472 may operate separately. In some embodiment, the reinforcing plates 461 and 462 and/or the digitizer 470 may be omitted.

According to various embodiments, the flexible display 230 may include at least one functional member (not shown) disposed between the polymer layer 440 and the support plate 450 or under the support plate 450. According to an embodiment, the functional member may include a graphite sheet for heat dissipation, a force touch FPCB, a fingerprint sensor FPCB, an antenna radiator for communication, or a conductive/non-conductive tape. According to an embodiment, when bending is impossible, the functional member may be individually disposed in the first housing (e.g., the first housing 210 in FIG 1A) and the second housing (e.g., the second housing 220 in FIG 1A). According to an embodiment, when bending is possible, the functional member may be disposed from the first housing (e.g., the first housing 210 in FIG 1A) toat least a part of the second housing(e.g., the second housing 220 in FIG 1A) through the hinge device (e.g., the hinge device 320 in FIG 3).

According to various embodiments, the flexible display 230 may include a bending portion 432 disposed to be bentfrom the display panel 430 to at least a part of the rear surface (e.g., in the negative z-axis direction)of the flexible display 230. According to an embodiment, the bending portion 432 may include an extension portion 4321 extending from the display panel 430 and having a control circuit 4321a,and a flexible substrate 4322 electrically connected to the extension portion 4321 and having a plurality of electric elements. According to an embodiment, the control circuit 4321a may include a display driver IC (DDI) or a touch display driver IC (TDDI) mounted on the extension portion 4321 having an electrical wiring structure. According to an embodiment, the bending portion 432 may include a chip on panel or chip on plastic (COP) structure in which the control circuit 4321a is directly disposed on the extension portion 4321. In some embodiment, the bending portion 432 may include a chip on film (COF) structure in which the control circuit 4321a is mounted on a separate connection film (not shown) connecting the extension portion 4321 and the flexible substrate 4322. According to an embodiment, the flexible display 230 may include the plurality of electrical elements (not shown) disposed on the flexible substrate 4322.According to an embodiment, the flexible display 230may include an FPCB connector 4323 extending from the flexible substrate 4322 andelectrically connected to a substrate (e.g., the second substrate 272 in FIG 3) of the electronic device (e.g., the electronic device 200 in FIG 3). According to an embodiment, the plurality of electrical elements may include a touch IC, a flash memory for a display, a diode for preventing ESD, a pressure sensor, a fingerprint sensor, or a passive element such as a decap. In another embodiment, when the bending portion 432 is disposed in a region of the flexible display 230 facing the first housing (e.g., the first housing 210 in FIG 1A), the FPCB connector 4323may be electrically connected to another substrate (e.g., the first substrate 271 in FIG 3) of the electronic device (e.g., the electronic device 200 in FIG 3).

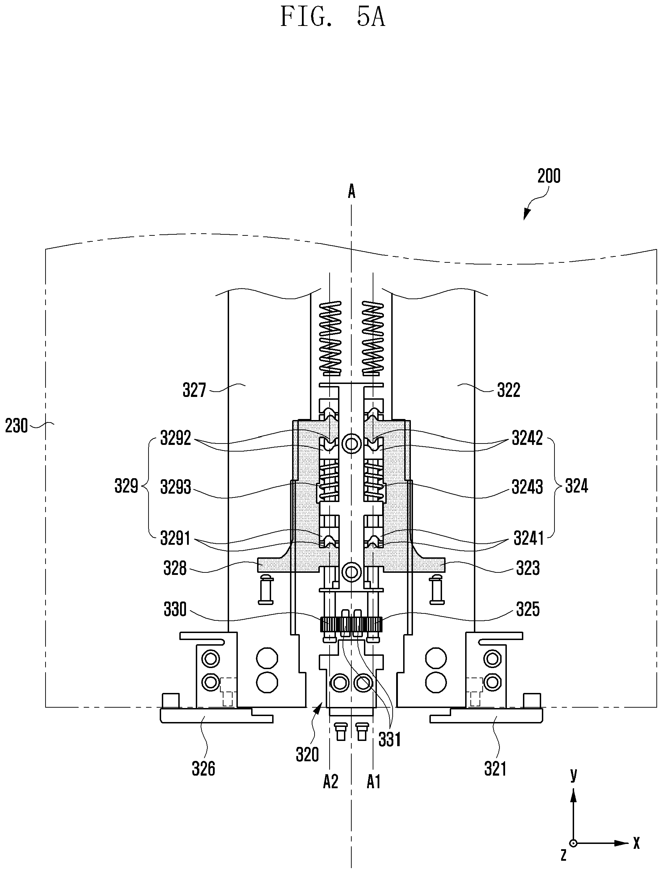

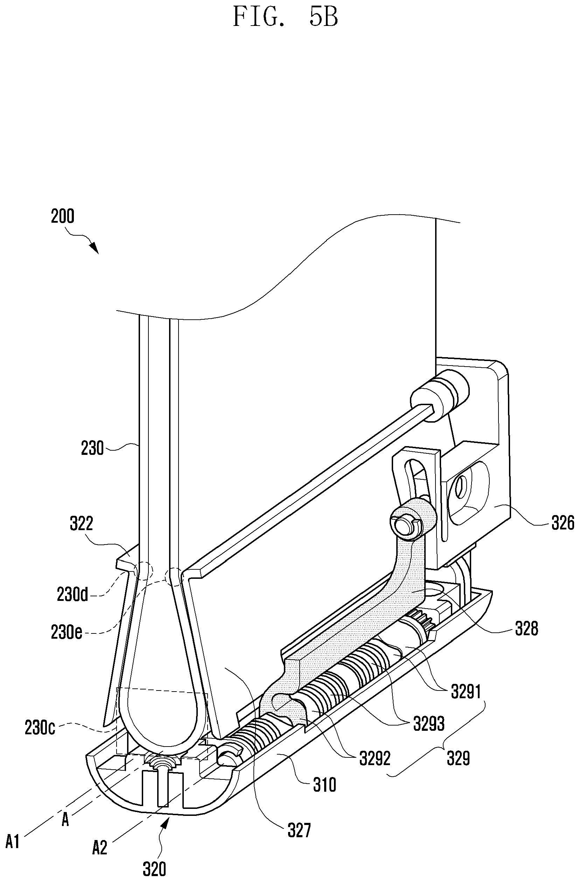

FIG 5A is a partial configuration view of an electronic device illustrating an arrangement structure of a hinge device according to various embodiments of the disclosure.FIG 5B is a partial perspective view of an electronic device showing a state in which a flexible display is folded through a hinge device according to various embodiments of the disclosure.

With reference to FIGS. 5A and 5B, the electronic device 200 may include the hinge device 320 that connects the first housing 210 and the second housing 220 in a foldable manner. According to an embodiment, the hinge device 320 may include a pair of hinge modules 324 and 329 accommodated in at least a part of the hinge housing 310, a pair of arms 323 and 328 rotatably connected to the pair of hinge modules 324 and 329, a pair of hinge brackets 321 and 326 to which the pair of arms 323 and 328 are slidably connected in part, and a pair of hinge plates 322 and 327 rotatably connected tothe pair of hinge brackets 321 and 326.

According to various embodiments, the first hinge module 324 of the pair of hinge modules 324 and 329 may include a pair of first cam structures 3241 and 3242 disposed to provide a free stop function of the electronic device 200 and a pressing force in the direction of folding or unfolding upon rotation above the inflection point by the first arm 323 rotated on a first rotational axis A1 spaced apart from the folding axis A in a designated direction (the x-axis direction), and a spring 3243 for pressing the first cam structures 3241 and 3242 in the direction of the first rotational axis A1. The second hinge module 329 of the pair of hinge modules 324 and 329 may include a pair of second cam structures 3291 and 3292 disposed to provide the same function as the first hinge module 324 by the second arm 328 rotated on a second rotational axis A2 spaced apart from the folding axis A in a designated direction (the negative x-axis direction), and a spring 3293 for pressing the second cam structures 3291 and 3292 in the direction of the second rotational axis A2. According to an embodiment, the first hinge module 324 and the second hinge module 329 may operate simultaneously in response to the operation of the electronic device 200.According to an embodiment, the hinge device 320 may include a first gear 325 disposed to rotate on the first rotational axis A1, a second gear 330 disposed to rotate on the second rotational axis A2, and at least one idle gear 331 connecting the first gear 325 and the second gear 330 through gear coupling. According to an embodiment, the first gear 325, the second gear 330, and the idle gear 331 may induce the first housing 210 and the second housing220 to operate with the same rotation amount on the folding axis Ain response to the folding or unfolding operation of the electronic device 200.

According to various embodiments, the pair of hinge plates 322 and 327 may include the first hinge plate 322 movably combined with the first housing 210, and the second hinge plate 327 movably combined with the second housing 220. According to an embodiment, the first hinge plate 322 may be rotatably coupled to the first hinge bracket 321 combined with the first housing 210.According to an embodiment, the second hinge plate 327 may be rotatably coupled to the second hinge bracket 326 combined with the second housing 220.According to an embodiment, the first arm 323 may be slidably coupled to at least a part of the first hinge bracket 321, and the second arm 328 may be slidablycoupled to at least a part of the second hinge bracket 326. Therefore, when the electronic device 200 is in an unfolded state, the first hinge plate 322 and the second hinge plate 327 may support the flexible display 230 by forming substantially the same plane as the first housing 210 and the second housing 220. According to an embodiment, when the electronic device 200 is in a folded state, the first hinge plate 322 and the second hinge plate 327 may rotate at a certain rotational amount so as not to be parallel to the first housing 210 and the second housing 220 based on the first hinge bracket 321 and the second hinge bracket 326, so that the folding region 230c of the flexible display 230 may be positioned in a supported state to maintains a standardized shape (e.g.,a waterdrop shape).

According to various embodiments, the flexible display 230 may include a folding region 230c that maintains a waterdrop-like bent shape in the folded state, a first bending region 230d (e.g., a first reverse bending region) that is bent in the opposite direction to the folding region 230c through the support of the first hinge plate 322 in a region corresponding to a connection portion between the first hinge plate 322 and the first housing 210, and a second bending region 230e (e.g., a second reverse bending region) that is bent in the opposite direction to the folding region 230c through the support of the second hinge plate 327. For example, the first bending region 230d may be formed in the first area (e.g., the first area 230a in FIG 1A) of the flexible display 230. According to an embodiment, the second bending region 230e may be formed in the second area (e.g., the second area 230b in FIG 1A) of the flexible display 230. According to an embodiment,the first bending region 230d and the second bending region 230e have reverse bending sections bent in theopposite direction to the bending direction of the folding region 230c in the folded state of the electronic device 200, thereby helping to form a bending shape (e.g.,waterdrop shape) of the folding region 230c of the flexible display 230.

According to various embodiments of the disclosure, the electronic device 200 has various structures that can help improve the bendability of the first bending region 230d and the second bending region 230e, thereby helping to improve operational reliability. In addition, the electronic device 200 according to various embodiments of the disclosure helps to improve the bendability of the first bending region 230d and the second bending region 230eand provides high rigidity in the corresponding region, thereby helping to improve the surface quality of the flexibility display 230. In addition, the electronic device 200 according to various embodiments of the disclosure helps to improve the bendability of the first bending region 230d and the second bending region 230e andhas an avoidance structure for avoiding the interference of a detachable digitizer (e.g.,the digitizer 470in FIG 4) in the folded state, thereby helping to improve operational reliability.

Hereinafter, a structure for improving bendabilityfor the first bending region 230d and the second bending region 230e, a structure for reinforcing rigidity, and/or a structure for avoiding the interference of the digitizer 470 will be described in detail.

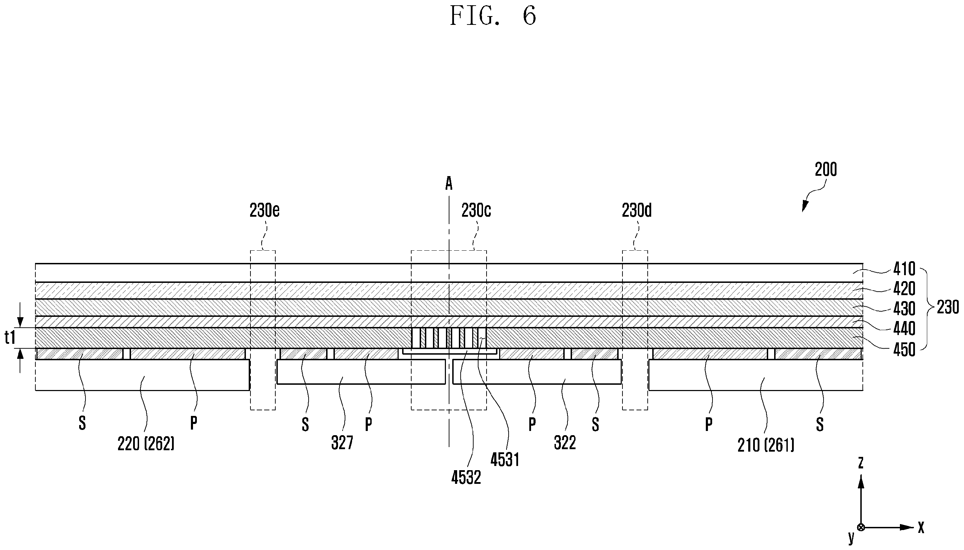

FIGS. 6 to 14E illustrate various exemplary embodiments of the disclosure, and in the drawings substantially the same components are given the same reference numerals while detailed descriptions thereof are omitted. In addition, specific components presented in each figure may be applied to other figures or replaced with specific components of other figures.

FIG 6 is a partial cross-sectional view of an electronic device taken along the line 6-6 of FIG 1A according to various embodiments of the disclosure.

With reference to FIG 6, the electronic device 200 may include a first housing 210 including a first support member 261, a second housing 220 including a second support member 262, and a flexible display 230 disposed to be supported by the first housing 210 and the second housing 220. According to an embodiment, the flexible display 230 may be disposed to be supported by thefirst support member 261 extending from a first lateral member (e.g., the first lateral member 213 in FIG 1A) forming a part of the side surface of the electronic device 200, and the second support member 262 extending from a second lateral member (e.g., the second lateral member 223 in FIG 1A) forming a part of the side surface of the electronic device 200. According to an embodiment, the electronic device 200 may include a first hinge plate 322 (e.g., a first wing plate) disposed in the inner space of the first housing 210, and a second hinge plate 327 (e.g., a second wing plate) disposed in the inner space of the second housing 220. According to an embodiment, when the electronic device 200 is in a folded state,the first hinge plate 322 and the second hinge plate 327 may be disposed to support a part of the rear surface of the flexible display 230 such that a folding region 230c of the flexible display 230 may have a standardized bent shape (e.g.,a waterdrop shape). According to an embodiment, when the electronic device 200 is in an unfolded state, the first housing 210, the first hinge plate 322, the second housing 220, and the second hinge plate 327 may form substantially the same plane to support the flexible display 230. This construction may reinforce the rigidity of the electronic device.

According to various embodiments, the flexible display 230 may include a window layer 410 and include a polarizer 420,a display panel 430, a polymer layer 440, and a support plate 450, which are sequentially disposed under the window layer 410. According to an embodiment, the support plate 450 may include a first pattern 4531 having at least one opening formed in the folding region 230c at predetermined intervals to provide bendability to the flexible display 230. In some embodiment, the first pattern 4531 may include at least one recess formed lower than the outer surface. In some embodiment, the first pattern 4531 may have a mixed form of at least one opening and at least one recess. According to an embodiment, the flexible display 230 may include ablocking member 4532 disposed in a region corresponding to the folding region 230c under the support plate 450 and disposed to block a plurality of openings of the first pattern 4531. According to an embodiment, the blocking member 4532 may include thermoplastic polyurethane (TPU) attached to the support plate 450.

According to various embodiments, the flexible display 230 may include a first bending region 230d (e.g., a first reverse bending section) formed in a boundary region between the first hinge plate 322 and the first housing 210,and a second bending region 230e (e.g., a second reverse bending section) formed in a boundary region between the second hinge plate 327 and the second housing 220. For example, the first bending region 230d may be formed by the first hinge plate 322 that supports the rear surface of the flexible display 230 by being rotated at a predetermined angle with respect to the first housing 210 to maintain the standardized bending shape of the folding region 230c when the electronic device 200 is in the folded state. According to an embodiment, the second bending region 230e may be formed by the second hinge plate 327 that supports the rear surface of the flexible display 230 by being rotated at a predetermined angle with respect to the second housing 220 to maintain the standardized bending shape of the folding region 230c when the electronic device 200 is in the folded state. For example, the first bending region 230d and the second bending region 230e may be reverse bending regions bent in the opposite direction to the folding region 230c. For example, the first bending region 230d and the second bending region 230e may have a reverse bending section bent with a curvature greater than that of the folding region 230c in the opposite direction to the bending direction of the folding region when the electronic device 200 is in the folded state.

According to various embodiments, the electronic device 200 may have a bendability enhancing structure provided at positions corresponding to the first bending region 230d and the second bending region 230e. According to an embodiment, when the flexible display 230 is viewed from above, the first hinge plate 322 maybe attached to therear surface of the flexible display 230 through an adhesive member P between the folding region 230c and the first bending region 230d. According to an embodiment, the first hinge plate 322 may be attached to the rear surface of the support plate 450. In this case,on the rear surface of the support plate 450, the first hinge plate 322 may be attached up to a region corresponding to at least a part of the first pattern 4531 through the adhesive member P. In some embodiment, the first hinge plate 322 may be attached to a region except for the first pattern 4531 on the rear surface of the support plate 450. According to an embodiment, when the flexible display 230 is viewed from above, the first housing 210 may be attached to the rear surface of the support plate 450 through an adhesive member P so as not to overlap with the first bending region 230d. For example, the first bending region 230d may be helpful in enhancing the bendability because an adhesive member P and/or a step compensating member S for the first hinge plate 322 and the first housing 210 are not provided. In some embodiment, at least a part of the first housing 210 may be disposed to overlap with the first bending region 230d when the flexible display 230 is viewed from above. In some embodiment, at least a part of the second housing 220 may be disposed to overlap with the second bending region 230e when the flexible display 230 is viewed from above. In some embodiment, while the first hinge plate 322 and the second hinge plate 327 are omitted,the electronic device 200 may be configured such that the folding region 230c,the first bending region 230d, and the second bending region are supported through the first housing 210 and the second housing 220.

According to various embodiments, when the flexible display 230 is viewed from above, the second hinge plate 327 may be attached to the rear surface of the flexible display 230 through an adhesive member P between the folding region 230c and the second bending region 230e. In this case, on the rear surface of the support plate 450, the second hinge plate 327 may be attached up to a region corresponding to at least a part of the first pattern 4531 through the adhesive member P. In some embodiment, the second hinge plate 327 may be attached to a region except for the first pattern 4531 on the rear surface of the support plate 450. According to an embodiment, when the flexible display 230 is viewed from above, the second housing 220 may be attached to the rear surface of the support plate 450 through an adhesive member P so as not to overlap with the second bending region 230e. For example, the second bending region 230e may be helpful in enhancing the bendability because an adhesive member P and/or a step compensating member S for the second hinge plate 327 and the second housing 220 are not provided. According to some embodiment, in the first bending region 230d and the second bending region 230e, the first hinge plate 322 and the second hinge plate 327 may be attached in part to the rear surface of the support plate 450through the adhesive member P, and the step compensating member S may be disposed in the remaining part. According to some embodiment, in the first bending region 230d and the second bending region 230e, the first housing 210 and the second housing 220 may be attached in part to the rear surface of the support plate 450 through the adhesive member P, and the step compensating member S may be disposed in the remaining part. For example, the first bending region 230d may be configured to refrain from being attached to the first housing 210 and the first hinge plate 322, and the second bending region 230e may be configured to refrain from being attached to the second housing 220 and the second hinge plate 327. In some embodiment, the first bending region 230d may not be attached to the first housing 210 and the first hinge plate 322, and the second bending region 230e may not be attached to the second housing 220 and the second hinge plate 327.

According to various embodiments, the support plate 450 may be formed of a material and/or a thickness t1 having bending rigidity capable of providing bendability to regions corresponding to at least the first and second bending regions 230d and 230eeven if no bendability reinforcing structure (e.g., opening and/or recess) is provided. For example, the bending rigidity of the support plate 450 in the regions corresponding to at least the first and second bending regions 230d and 230e may be set to about 6×10⁷ Gpa·*µ*m ³ or less. Accordingly, the regions of the support plate 450 corresponding to at least the first and second bending regions 230d and 230e may be formed to maintain a specific thickness without an opening and/or a recess. In other words, the thickness of the regions of the support plate 450 corresponding to at least the first and second bending regions 230d and 230e may have a constant thickness that does not change throughout the first bending region 230d and the second bending region 230e.

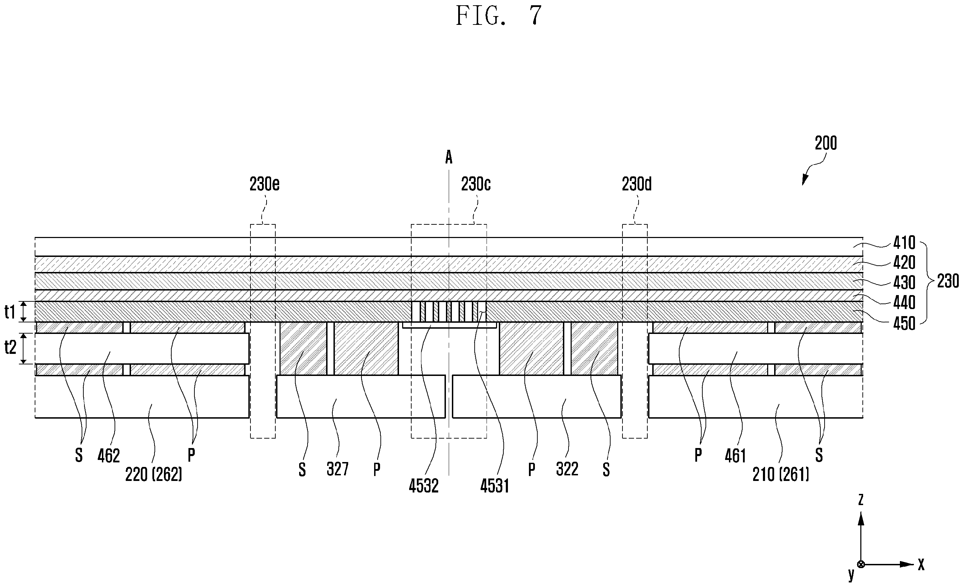

FIGS. 7 to 9 are partial cross-sectional views of an electronic device according to various embodiments of the disclosure.

In the description of the electronic device 200 in FIGS. 7 to 9, substantially the same components as those of the electronic device 200 in FIG 6 are assigned the same reference numerals, and detailed descriptions thereof may be omitted.

With reference to FIG 7, the electronic device 200 may include a first reinforcing plate 461 disposed between the support plate 450 and the first housing 210, and a second reinforcing plate 462 disposed between the support plate 450 and the second housing 220. According to an embodiment, the first reinforcing plate 461 and the second reinforcing plate 462 provide rigidity for supporting the flexible display 230, thereby helping to improve surface quality.

According to various embodiments, when the flexible display 230 is viewed from above, the first reinforcing plate 461 may be disposed to be attached to the rear surface of the support plate 450 and the first housing 210 at a position overlapping with at least a part of the first housing 210, except for a region between the first bending region 230d and the folding region 230c, through an adhesive member P and/or a step compensating member S. In some embodiment, the first reinforcing plate 461 may be disposed to completely overlap with the first housing 210 when the flexible display 230 is viewed from above. According to an embodiment, when the flexible display 230 is viewed from above, the second reinforcing plate 462 may be disposed to be attached to the rear surface of the support plate 450 and the second housing 220 at a position overlapping with at least a part of the second housing 220, except for a region between the second bending region 230e and the folding region 230c, through the adhesive member P and/or the step compensating member S. In some embodiment, the second reinforcing plate 462 may be disposed to completely overlap with the second housing 220 when the flexible display 230 is viewed from above. For example, the first bending region 230d and the second bending region 230e may be configured to refrain from being attached to the first reinforcing plate 461 and the second reinforcing plate 462, respectively. In this case, as in the case of FIG 6, when the flexible display 230 is viewed from above, the first hinge plate 322 may be attached to the rear surface of the support plate 450 between the folding region 230c and the first bending region 230d. According to an embodiment, as in the case of FIG 6, when the flexible display 230 is viewed from above,the second hinge plate 327 as well may be attached to the rear surface of the support plate 450between the folding region 230c and the second bending region 230e. For example, in the first bending region 230d and the second bending region 230e,the electronic device 200 does not include the first and second hinge plates 322 and 327 disposed on the rear surface of the support plate 450 and the adhesive member P and/or the step compensating member S for the first and second housings 210 and 220, so it may behelpful in enhancing the bendabilityin the corresponding regions.

According to an embodiment, the thickness t1 of the support plate 450 may besmaller than the thickness t2 of the reinforcing plates 461 and 462, thereby helping to improve the bendabilityof the flexible display. This configuration can help to improve bendabilityby relatively reducing the thickness t1 of the support plate 450 disposed close to the display panel 430 while maintaining the overall thickness of the flexible display 230, and also help to reinforce rigidityby relatively increasing the thickness t2 of the reinforcing plates 461 and 462. This is because the reinforcing plates 461 and 462 are disposed so as not to overlap with a region between the first bending region 230d and the second bending region 230e when the flexible display 230 is viewed from above.

In some embodiment, at least a part of the first housing 210 and/or at least a part of the first hinge plate 322may be disposed to overlap withthe first bending region 230d when the flexible display 230 is viewed from above. In some embodiment, at least a part of the second housing 220 and/or at least a part of the second hinge plate 327 may be disposed to overlap with the second bending region 230e when the flexible display 230 is viewed from above. In some embodiment, each of the reinforcing plates 461 and 462 may be disposed not to overlap with each of the first bending region 230d and the second bending region 230e when the flexible display 230 is viewed from above.

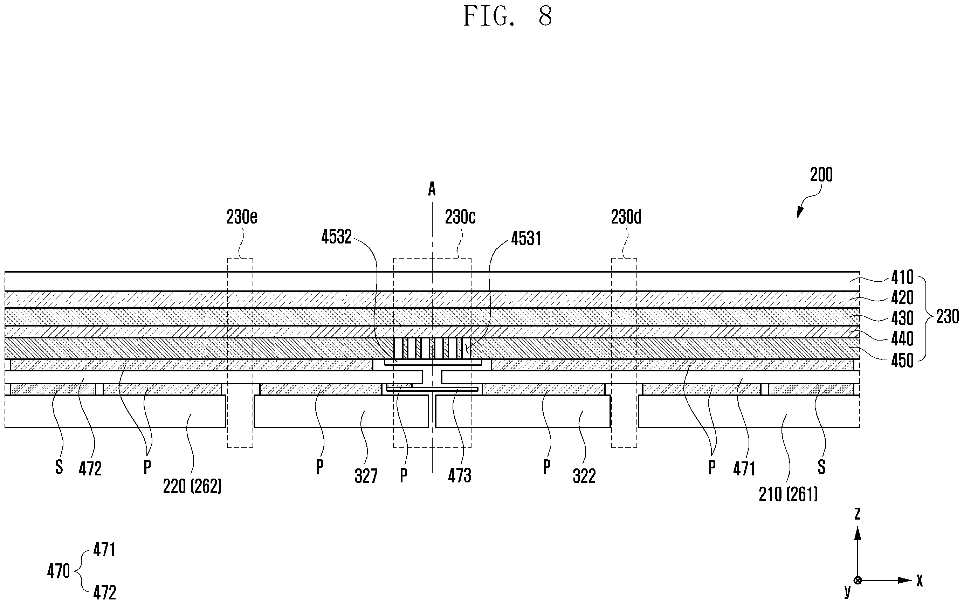

In the description of the electronic device 200 in FIG 8,substantially the samecomponents as those of the electronic device 200 in FIG 6are assigned the same reference numerals, and detailed description thereof may be omitted.

With reference to FIG 8, the electronic device 200 may include a digitizer 470 disposed under the support plate 450. According to an embodiment, when the flexible display 230 is viewed from above, the digitizer 470 may include a first digitizer 471 disposed in a region overlapping with the first housing 210 and at least a part of the first hinge plate 322, and a second digitizer 472 disposed in a region overlapping with the second housing 220 and at least a part of the second hinge plate 327. In some embodiment, the first digitizer 471 may be disposed to completely overlap the first housing 210 and the second digitizer 472 may be disposed to completely overlap the second housing 220 when the flexible display 230 is viewed from above. In some embodiment, the first digitizer 471 may be disposed to overlap at least 50% of the first hinge plate 322 and the second digitizer 472 may be disposed to overlap at least 50% of the second hinge plate 327 when the flexible display 230 is viewed from above. In some embodiment, the first digitizer 471 may be disposed to overlap between 80% and 100% of the first hinge plate 322 and the second digitizer 472 may be disposed to overlap between 80% and 100% of the second hinge plate 327 when the flexible display 230 is viewed from above. In some embodiment, the first digitizer 471 may be disposed to overlap between 95% and 99% of the first hinge plate 322 and the second digitizer 472 may be disposed to overlap between 95% and 99% of the second hinge plate 327 when the flexible display 230 is viewed from above. For example, the first digitizer 471 and the second digitizer 472 have a separate arrangement structure in a portion corresponding to the folding region 230c to improve bendability, but the first digitizer 471 and the second digitizer 472can operate as one digitizer 470by being electrically connected to the substrates (e.g., the substrates 271 and 272 in FIG 3) disposed in the inner space of the respective housings 210 and 220.

According to various embodiments, when the flexible display 230 is viewed from above, the first hinge plate 322 maybe attached to the rear surface ofthe first digitizer 471through an adhesive member Pbetween the folding region 230c and the first bending region 230d. According to an embodiment, when the flexible display 230 is viewed from above, the second hinge plate 327 may be attached to therear surface of the second digitizer 472 through an adhesive member Pbetween the folding region 230c and the second bending region 230e. According to an embodiment, the first housing 210 may be attached to the rear surface of the first digitizer 471 through the adhesive member P, except for the first bending region 230d. According to an embodiment, the second housing 220 may be attached to the rear surface of the second digitizer 472 through the adhesive member P, except for the second bending region 230e.

According to various embodiments, the electronic device 200 may include a protective member 473 disposed between the digitizer 470 and the hinge plates 322 and 327 so as to block agap separating the first digitizer 471 and the second digitizer 472 in a region corresponding to the folding region 230c.According to an embodiment, the protective member 473 is a thin film member and may be formed of a polymer (e.g., rubber, silicone urethane, polyimide (PI), polycarbonate (PC), or TPU) or a metal material. According to an embodiment, the protective member 473 may be attached to the rear surface of the first digitizer 471 and/or the rear surface of the second digitizer 472 through an adhesive member P. The protective member 473 can preventan interference phenomenon that the ends of the first and second digitizers 471 and 472 come into contact with the first hinge plate 322 and/or the second hinge plate 327when the electronic device 200 is in a folded state.

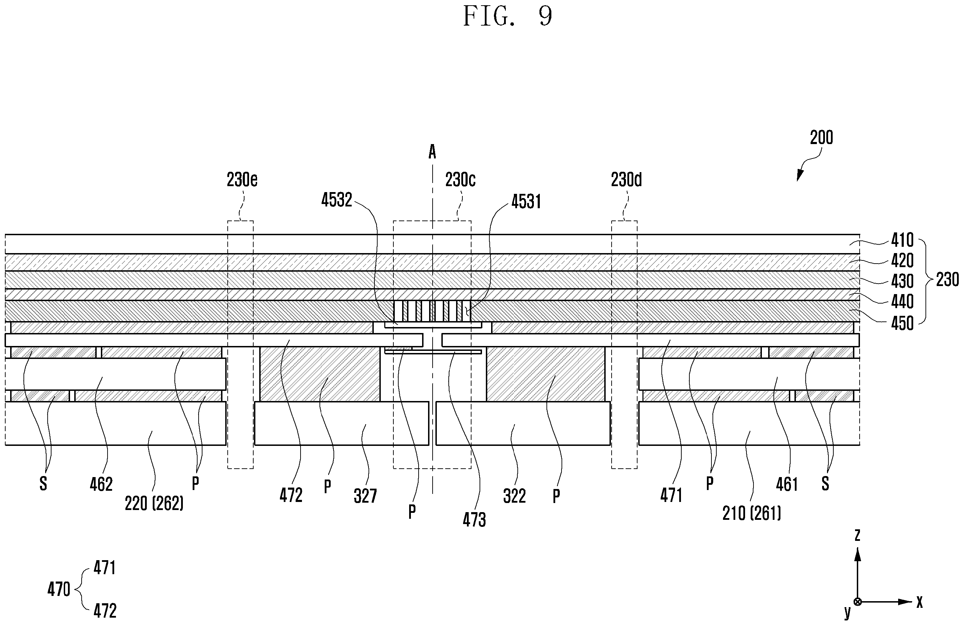

In the description of the electronic device 200 in FIG 9,substantially the samecomponents as those of the electronic device 200 in FIGS. 7 and 8 are assigned the same reference numerals, and detailed description thereof may be omitted.

With reference to FIG 9, the electronic device 200 may include a first reinforcing plate 461 disposed between the first digitizer 471 and the first housing 210, and a second reinforcing plate 462 disposed between the second digitizer 472 and the second housing 220. According to an embodiment, the first reinforcing plate 461 and the second reinforcing plate 462 provide rigidity for supporting the flexible display 230, thereby helping to improve surface quality.

According to various embodiments, when the flexible display 230 is viewed from above, the first reinforcing plate 461 may be disposed to be attached to the rear surface of the first digitizer 471 and the first housing 210 at a position overlapping with at least a part of the first housing 210, except for a region between the first bending region 230d and the folding region 230c, through an adhesive member P and/or a step compensating member S. According to an embodiment, when the flexible display 230 is viewed from above, the second reinforcing plate 462 may be disposed to be attached to the rear surface of the second digitizer 472 and the second housing 220 at a position overlapping with at least a part of the second housing 220, except for a region between the second bending region 230e and the folding region 230c, through the adhesive member P and/or the step compensating member S. In this case, when the flexible display 230 is viewed from above, the first hinge plate 322 may be attached to the rear surface of the first digitizer 471 through the adhesive member P between the folding region 230c and the first bending region 230d. According to an embodiment, when the flexible display 230 is viewed from above, the second hinge plate 327 may be attached to the rear surface of the second digitizer 472through the adhesive member P between the folding region 230c and the second bending region 230e. According to an embodiment, in the first bending region 230d and the second bending region 230e, the electronic device 200 does not include the first and second hinge plates 322 and 327 disposed on the rear surface of the digitizer 470 and the adhesive member P and/or the step compensating member S for the first and second housings 210 and 220, so it may behelpful in enhancing the bendabilityin the corresponding regions.

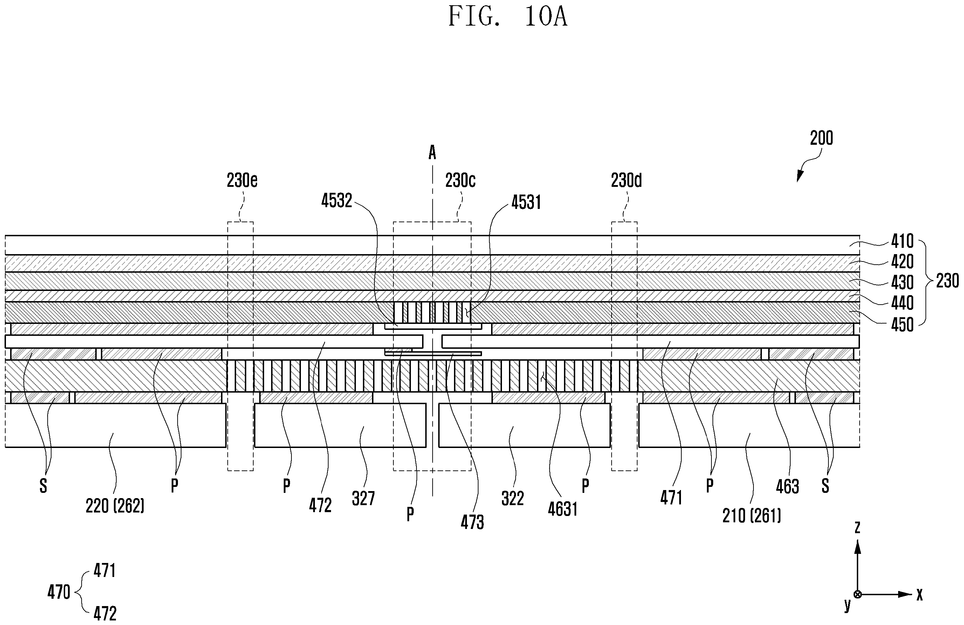

FIGS. 10A to 10E are partial cross-sectional views of an electronic device including a reinforcing plate having various shapes according to various embodiments of the disclosure.

In the description of the electronic device 200 in FIGS. 10A to 10E, substantially the same components as those of the electronic device 200 in FIG 9 are assigned the same reference numerals, and detailed description thereof may be omitted.

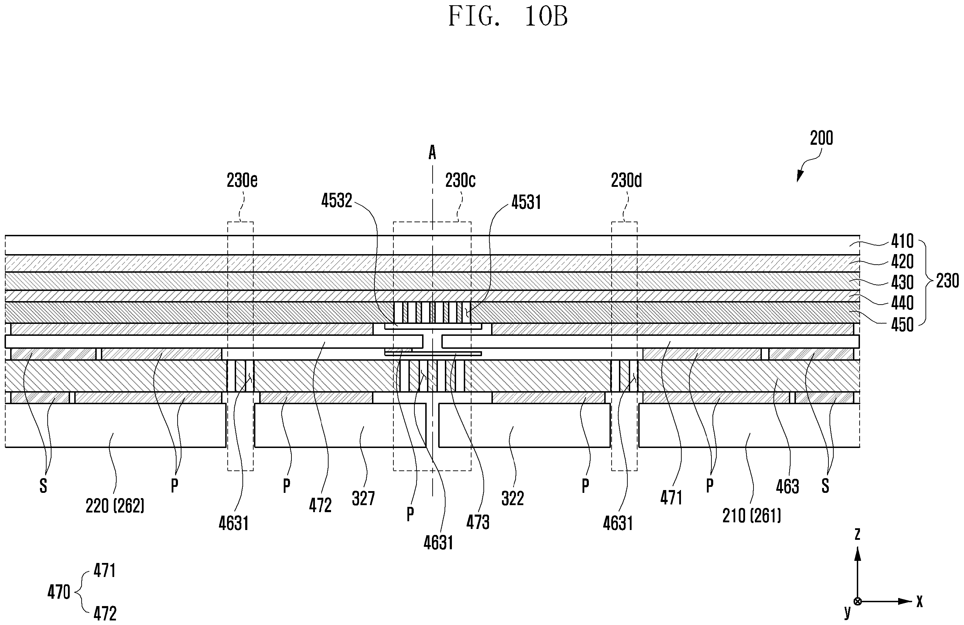

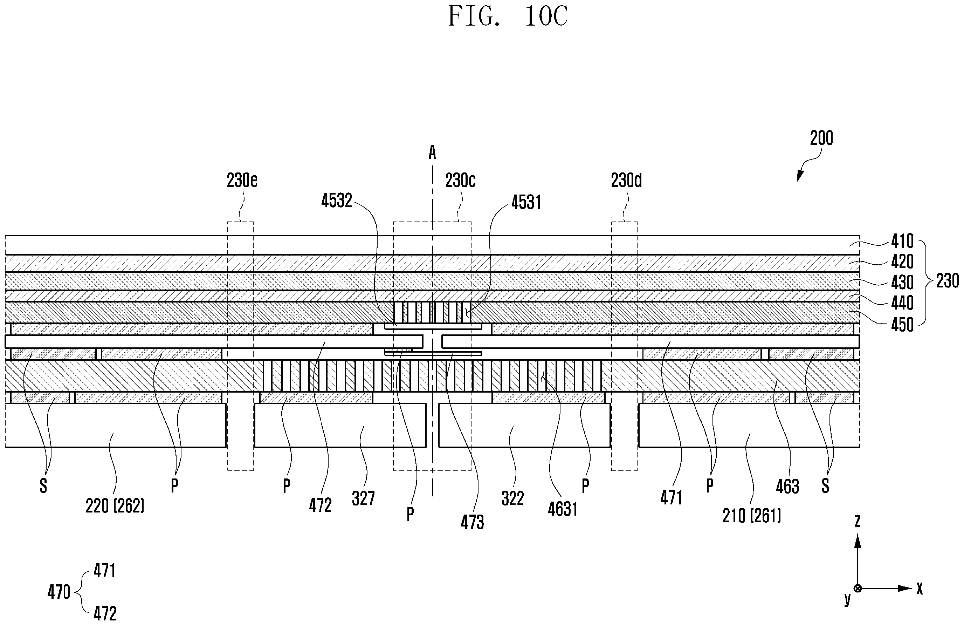

With reference to FIGS. 10A to 10C, the electronic device 200 may include an integrated reinforcing plate 463 (e.g., a reinforcing plate) replacing the first and second reinforcing plates 461 and 462 in FIG 9.According to an embodiment, the integrated reinforcing plate 463 may includea second pattern 4631 having at least one opening and/or at least one recess arranged to have a designated interval and a designated arrangement density to improve the bendability of the flexible display 230. According to an embodiment,as shown in FIG 10A, when the flexible display 230 is viewed from above, the second pattern 4631 of the integrated reinforcing plate 463 may be formed in all regions from the first bending region 230d tothe second bending region 230e via the folding region 230c. According to an embodiment, as shown in FIG 10B, when the flexible display 230 is viewed from above,the second pattern 4631 of the integrated reinforcing plate 463 may be formed only in a portion corresponding to the folding region 230c, a portion corresponding to the first bending region 230d, and a portion corresponding to the second bending region 230e. According to an embodiment,as shown in FIG 10C,when the flexible display 230 is viewed from above,the second pattern 4631 of the integrated reinforcing plate 463 may be formed in an overlapping portion up to just before the first bending region 230d from the folding region 230c and an overlapping portion up to just before the second bending region 230efrom the folding region 230c.

According to various embodiments, the integrated reinforcing plate 463 may be formed of a material and/or a thickness having bending rigidity capable of providing bendability to regions corresponding to at least the first and second bending regions 230d and 230e even if no bendability reinforcing structure (e.g., opening and/or recess) is provided. For example, the bending rigidity of the integrated reinforcing plate 463 in the regions corresponding to at least the first and second bending regions 230d and 230e may be set to about 6×10⁷Gpa·*µ*m ³ or less. Accordingly, the regions of the integrated reinforcing plate 463 corresponding to at least the first and second bending regions 230d and 230e may be formed to maintain a specific thickness without an opening and/or a recess. In some embodiment, the total bending rigidity of the integrated reinforcing plate 463 and the support plate 450 corresponding to the first and second bending regions 230d and 230e is set to about 6×10⁷Gpa·*µ*m ³ or less, so it may help to improve bendability.

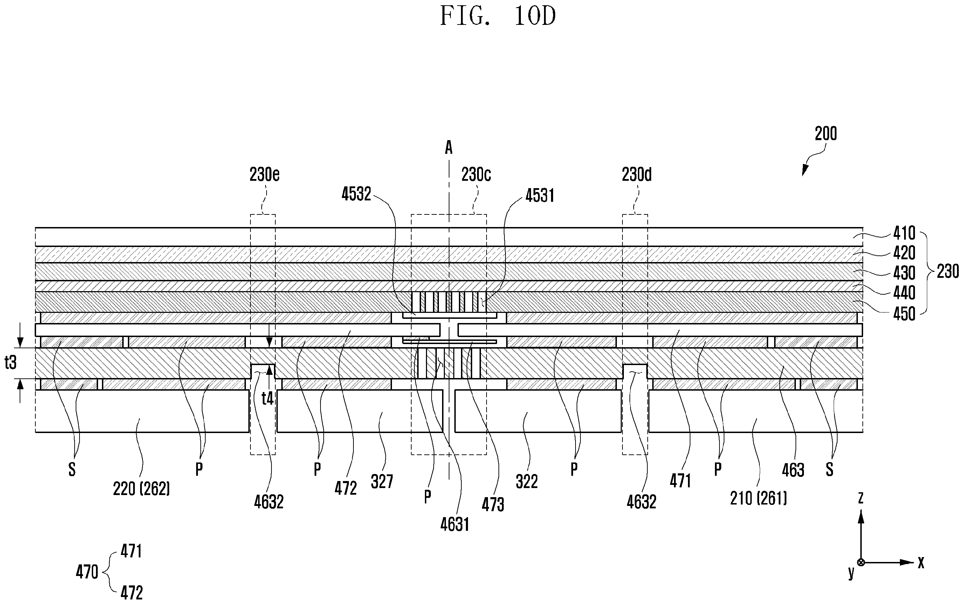

With reference to FIG 10D, when the flexible display 230 is viewed from above, the integrated reinforcing plate 463 may include the second pattern 4631 formed in a portion corresponding to the folding region 230c, and a recess 4632 (e.g., a groove or a concave portion) formed in a portion corresponding to the first bending region 230d and a portion corresponding to the second bending region 230e.According to an embodiment, the recess 4632 may be formed to have a predetermined depth lower than the surface of the integrated reinforcing plate 463 through an etching process. Therefore, the integrated reinforcing plate 463 may be formed such that the thickness t3 of a portion corresponding to a region surrounding the first and second bending regions 230d and 230e is greater than the thickness t4 of a portion corresponding to the first and second bending regions 230d and 230e. In some embodiment, the total bending rigidity of the integrated reinforcing plate 463 and the support plate 450 corresponding to the first and second bending regions 230d and 230e is set to about 6×10⁷Gpa·*µ*m ³ or less, so it may help to improve bendability.

According to various embodiments, the recess 4632 may be formed to have a rectangular cross section, but it is not limited thereto. For example, the recess 4632 may be formed to have a curved cross section. According to an embodiment, the integrated reinforcing plate 463 may help to improve the bendability of the flexible display 230 through the recess 4632 having the thickness t4 smaller than the surrounding region in a portion corresponding to the first and second bending regions230d and 230e. In some embodiment, the recess 4632 may be replaced with the second pattern 4631 in a portion corresponding to the folding region 230c of the integrated reinforcing plate 463. In some embodiment, the portion of the integrated reinforcing plate 463 corresponding to the folding region 230c may be disposed to have a mixture ofthe second pattern 4631 and the recess 4632. In some embodiment, the portion of the integrated reinforcing plate 463 corresponding to the first and second bending regions 230d and 230e may also be disposed to have a mixture of the second pattern 4631 and the recess 4632. In some embodiment, the recess 4632 may be formed on the upper surface of the integrated reinforcing plate 463 facing the digitizer 470,rather than the rear surface of the integrated reinforcing plate 463, or may be formed simultaneously on the upper surface and the rear surface.

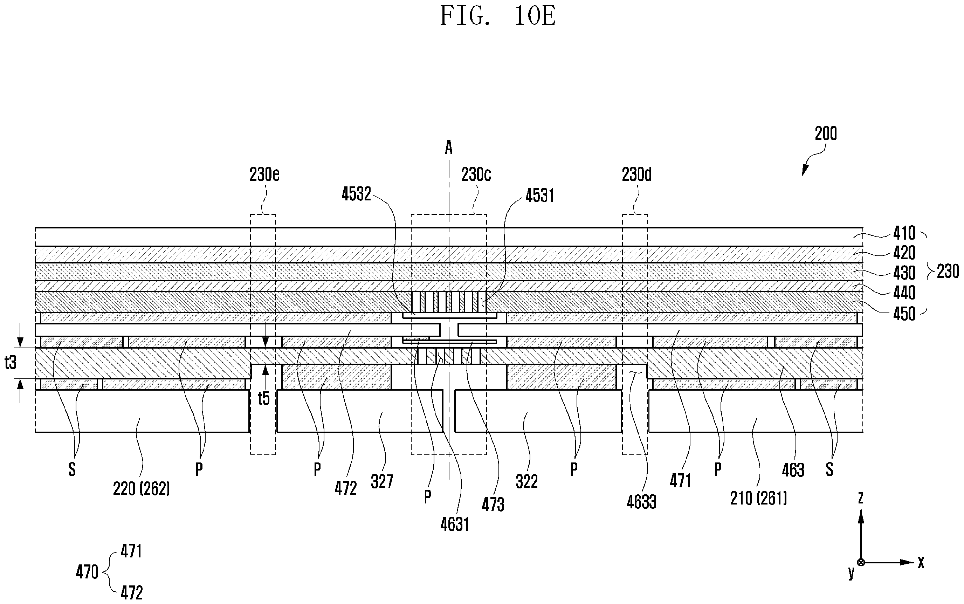

With reference to FIG 10E, the integrated reinforcing plate 463 may include a recess 4633 formed to have a thickness t5 smaller than the peripheral thickness t3 over a section from the first bending region 230d to the second bending region 230e. In this case, the integrated reinforcing plate 463 mayhelp to improve the bendability of the flexible display 230 in the folding region 230c and the first and second bending regions 230d and 230e through the recess 4633 having the relatively smallerthickness t5 in the folding region 230c as well as in the first and second bending regions 230d and 230e.

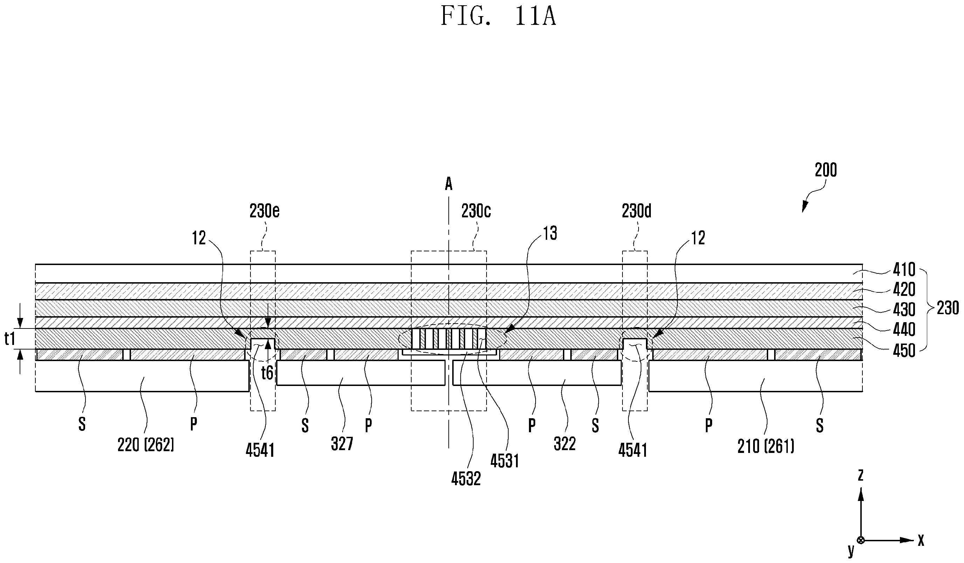

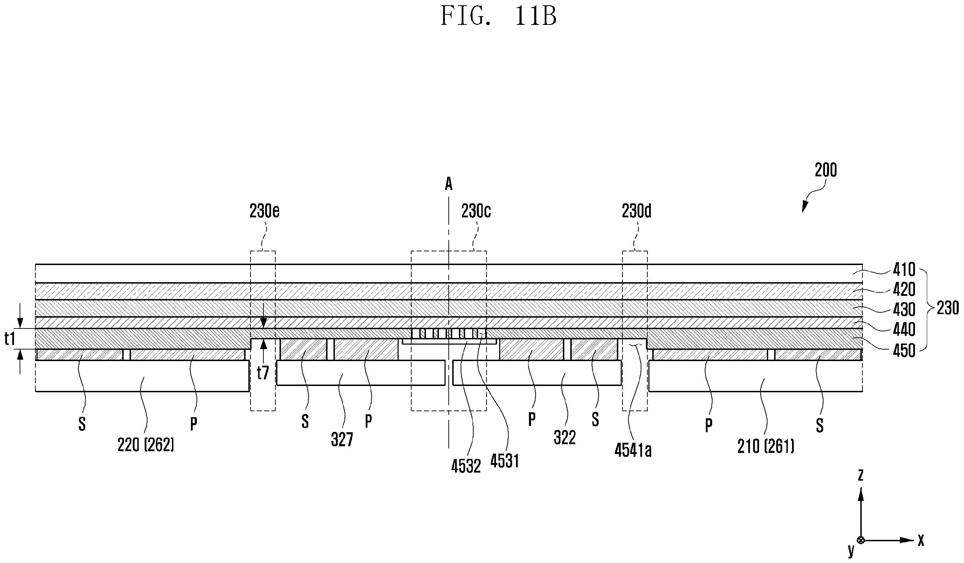

FIGS. 11A and 11B are partial cross-sectional views of an electronic device according to various embodiments of the disclosure.

In the description of the electronic device 200 in FIGS. 11A and 11B, substantially the same components as those of the electronic device 200 in FIG 6 are assigned the same reference numerals, and detailed description thereof may be omitted.

With reference to FIG 11A, when the flexible display 230 is viewed from above, the support plate 450 may include a first pattern 4531 formed in a portion corresponding to the folding region 230c, and a recess 4541 (e.g., a groove or a concave portion) formed in a portion corresponding to the first bending region 230d and a portion corresponding to the second bending region 230e. Therefore, the support plate 450 may be formed such that the thickness t1 of a portion corresponding to a region surrounding the first and second bending regions 230d and 230e is greater than the thickness t6 of a portion corresponding to the first and second bending regions 230d and 230e. By decreasing the thickness in the bending regions 230d, 230e, the flexible display 230 is more likely to bend in those bending regions 230d, 230e instead of the region surrounding the first and second bending regions 230d and 230e. According to an embodiment, when the support plate 450 is formed of a metal material, the recess 4541 may be formed to have a predetermined depth lower than the surface of the support plate 450 through an etching process. According to an embodiment, when the support plate 450 is formed of a polymer, the recess 4541 may be formed through an injection process. In some embodiment, the recess 4541 may be formed through various processes (e.g., a CNC process) depending on the material of the support plate 450. According to various embodiments, the recess 4541 may be formed to have a rectangular cross section, but is not limited thereto, and the recess 4541 may be formed to have a curved cross section. According to an embodiment, the support plate 450 may help to improve the bendability of the flexible display 230 through the first pattern 4531 formed in a portion corresponding to the folding region and the recess 4541 having the thickness t6 smaller than the surrounding region in a portion corresponding to the first and second bending regions 230d and 230e.

In some embodiment, the recess 4541 may be replaced with at least a part of the first pattern 4531 in a portion corresponding to the folding region 230c of the support plate 450. In some embodiment, the recess 4541 may be replaced with a plurality of openings of the first pattern 4531. In some embodiment, the portion of the support plate 450corresponding to the folding region 230c may be disposed to have a mixture of the first pattern 4531 and the recess 4541. In some embodiment, the portion of the support plate 450corresponding to the first and second bending regions 230d and 230e may also be disposed to have a mixture of the first pattern 4531 and the recess 4541. In some embodiment, the recess 4541 may be formed on the upper surface of the support plate 450facing the polymer layer 440, rather than the rear surface of the support plate 450, or may be formed simultaneously on the upper surface and the rear surface.

With reference to FIG 11B, the support plate 450may include a recess 4541a formed to have a thickness t7 smaller than the peripheral thickness t1 over a section from the first bending region 230d to the second bending region 230e. In this case, the support plate 450mayhelp to improve the bendability of the flexible display 230 in the folding region 230c and the first and second bending regions 230d and 230e through the recess 4541a having the relatively smallerthickness t7 in the folding region 230c as well as in the first and second bending regions 230d and 230e.

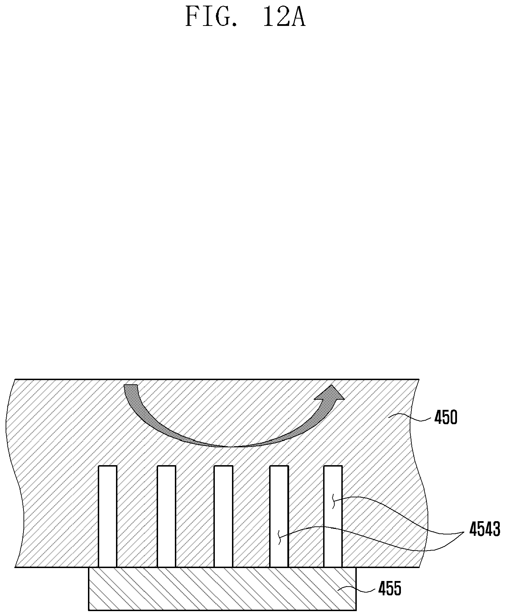

FIGS. 12A to 12D are views illustrating various patterns to be replaced with the recess formed in the region 12 of the support plate of FIG 11A according to various embodiments of the disclosure.

As shown in FIG 12A, the recess 4541 formed in the support plate 450 may be replaced with first concave patterns 4543 formed to have a designated interval and a designated depth. In this case, the first concave patterns 4543 may be arranged to have the same shape, the same depth, and the same interval. According to an embodiment, on the rear surface of the support plate 450, a blocking member 455 for covering the first concave patterns 4543 may be disposed to prevent external foreign matter from flowing into the first concave patterns 4543. According to an embodiment, the blocking member 455 may include a thin elastic film.

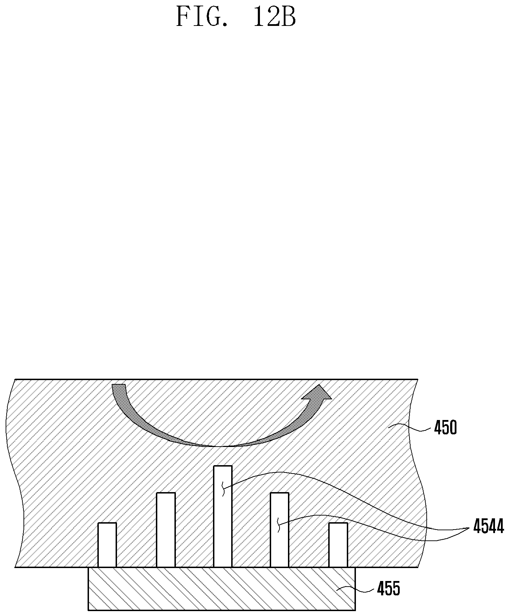

As shown in FIG 12B, the recess 4541 formed in the support plate 450 may be replaced with second concave patterns 4544. In this case, the second concave patterns 4544 may be formed to gradually decrease in depth from the center to the left and right. In some embodiment, the second concave patterns 4544 may be formed to gradually increase in depth from the center to the left and right. According to an embodiment, on the rear surface of the support plate 450, the blocking member 455 for covering the second concave patterns 4544may be disposed to prevent external foreign matter from flowing into the second concave patterns 4544.

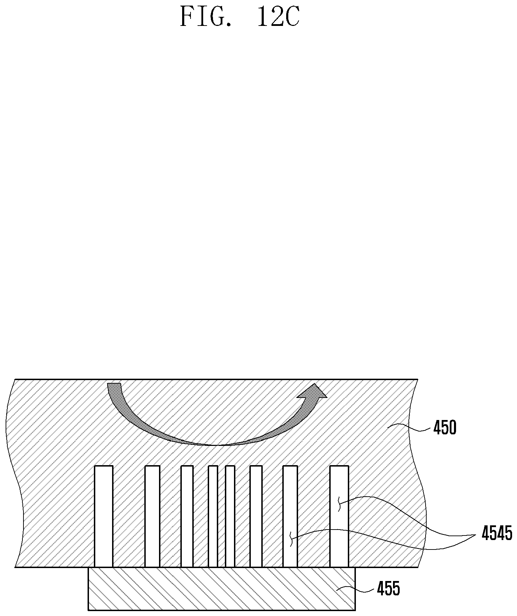

As shown in FIG 12C, the recess 4541 formed in the support plate 450 may be replaced with third concave patterns 4545. In this case, the third concave patterns 4545 may have the same depth and be formed tohave different widths and/or different intervals. In some embodiment, the third concave patterns 4545 may also be formed to have different depths, different widths, and/or different intervals. According to an embodiment, on the rear surface of the support plate 450, the blocking member 455 for covering the third concave patterns 4545may be disposed to prevent external foreign matter from flowing into the third concave patterns 4545.

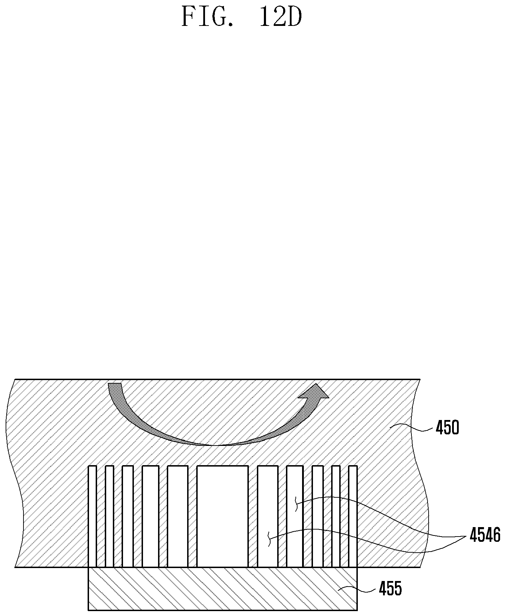

As shown in FIG 12D, the recess 4541 formed in the support plate 450 may be replaced with fourth concave patterns 4546. In this case, the fourth concave patterns 4546 may be formed to have the same depth and different widths. For example, the fourth concave patterns 4546 may be formed to gradually decrease in width from the center to the left and right. In some embodiment, the fourth concave patterns 4546 may be formed to gradually increase in width from the center to the left and right. According to an embodiment, on the rear surface of the support plate 450, the blocking member 455 for covering the fourth concave patterns 4546may be disposed to prevent external foreign matter from flowing into the fourth concave patterns 4546.

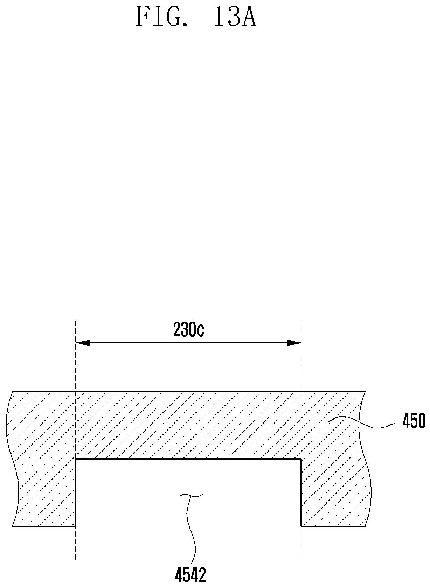

FIGS. 13A to 13C are views illustrating various recesses to be replaced with the first pattern disposed in the region 13 of FIG 11A according to various embodiments of the disclosure.

With reference to FIG 13A, the first pattern 4531 of the support plate 450 may be replaced with at least one recess 4542 formed at a predetermined depth from the rear surface.

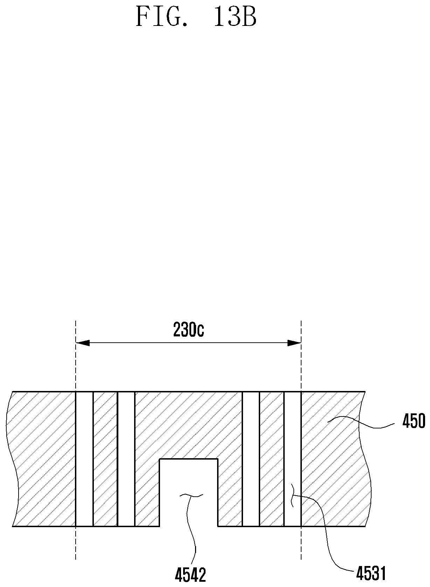

With reference to FIG 13B, the first pattern 4531 of the support plate 450 may be replaced with a mixture of the first pattern 4531 and at least one recess 4542 formed at a predetermineddepth from the rear surface.

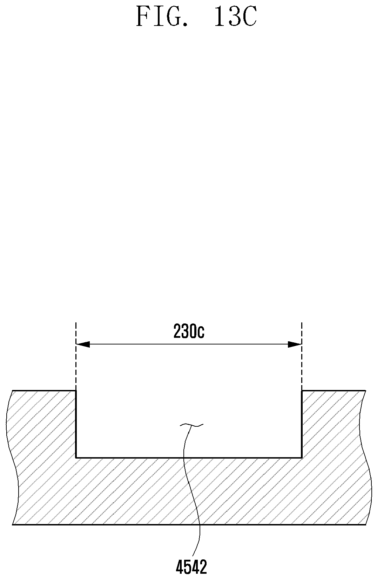

With reference to FIG 13C, the first pattern 4531 of the support plate 450 may be replaced with at least one recess 4542 formed at a predetermined depth from the upper surface. In some embodiment, the first pattern 4531 of the support plate 450 may be replaced with a mixture of the first pattern 4531 and at least one recess 4542 formed at a predetermined depth from the upper surface.

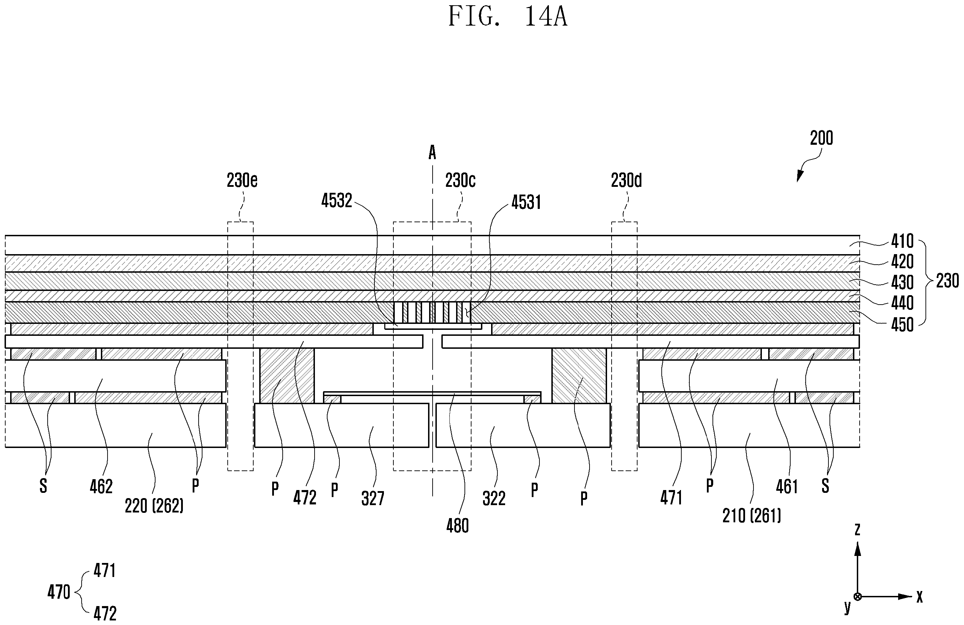

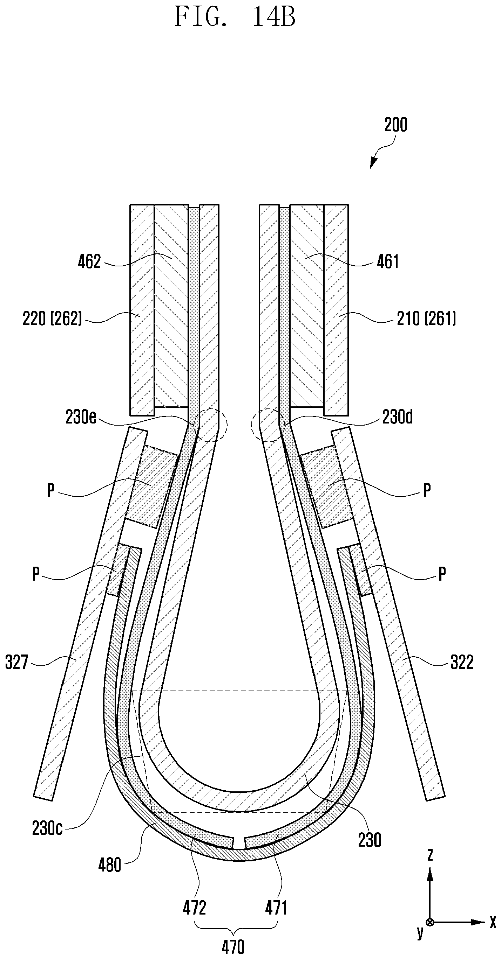

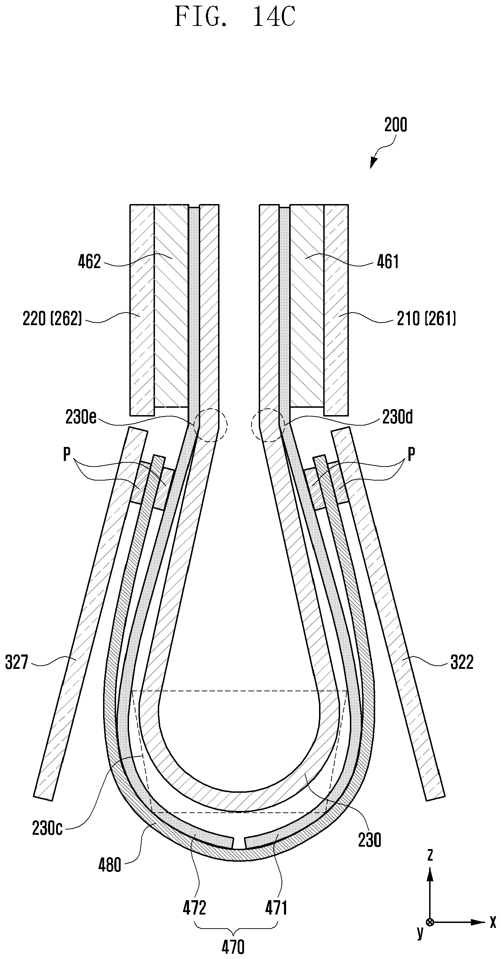

FIG 14A is a partial cross-sectional view of an electronic device including a protection plate according to various embodiments of the disclosure. FIGS. 14B and 14C are partial cross-sectional views illustrating an attachment structure of a protection plate in a folded state of an electronic device according to various embodiments of the disclosure.

In the description of the electronic device 200 in FIG 14A, substantially the same components as those of the electronic device 200 in FIG 9 are assigned the same reference numerals, and detailed description thereof may be omitted.

With reference to FIGS. 14A and 14B, the electronic device 200 may include a protective plate 480 disposed between the hinge plates 322 and 327 and the digitizer 470. According to an embodiment, when the electronic device 200 is in a folded state, the protective plate 480 may be disposed at a position wherethe first and second hinge plates 322 and 327 interfere with separated ends of the first and second digitizers 471 and 472. Thereby reducing the interference of the first and second hinge plates 322 and 327 with the first and second digitizers 471 and 472. For example, when the flexible display 230 is viewed from above, the protective plate 480 may be disposed to cover at least a position overlapping with the folding region 230c. According to an embodiment, one end of the protective plate 480 may be attached to the first hinge plate 322 through an adhesive member P, and the other end may be attached to the second hinge plate 327 through an adhesive member P. According to an embodiment, the protective plate 480 may be formed of a material favorable to plastic deformation, such as liquid metal, SUS, titanium, or polymer.

With reference to FIG 14C, the protective plate 480 may be attached to the hinge plates 322 and 327 and the digitizers 471 and 472 through the adhesive member P. In some embodiment, the protective plate 480 may be attachedat one end to the first hinge plate 322 and/or the second hinge plate 327 and attached at the other end to the first digitizer 471 and/or the second digitizer 472.

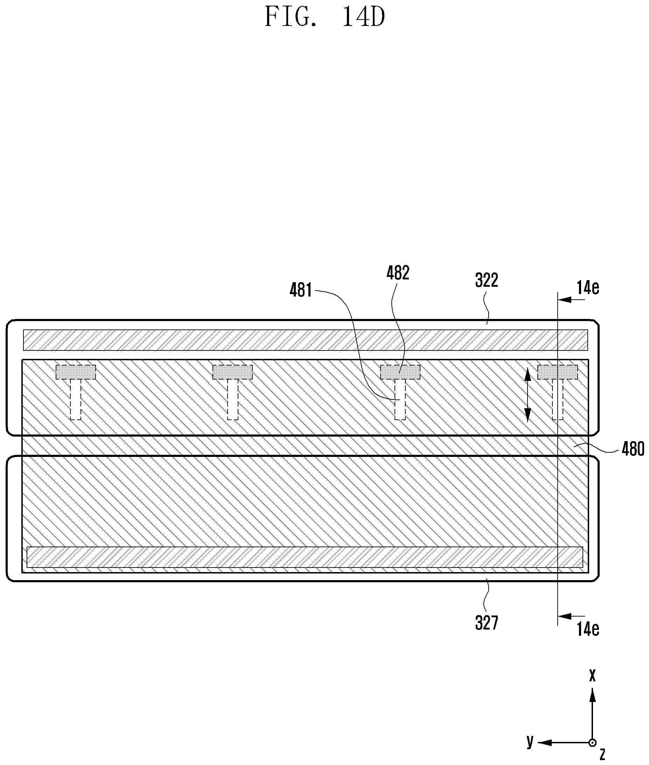

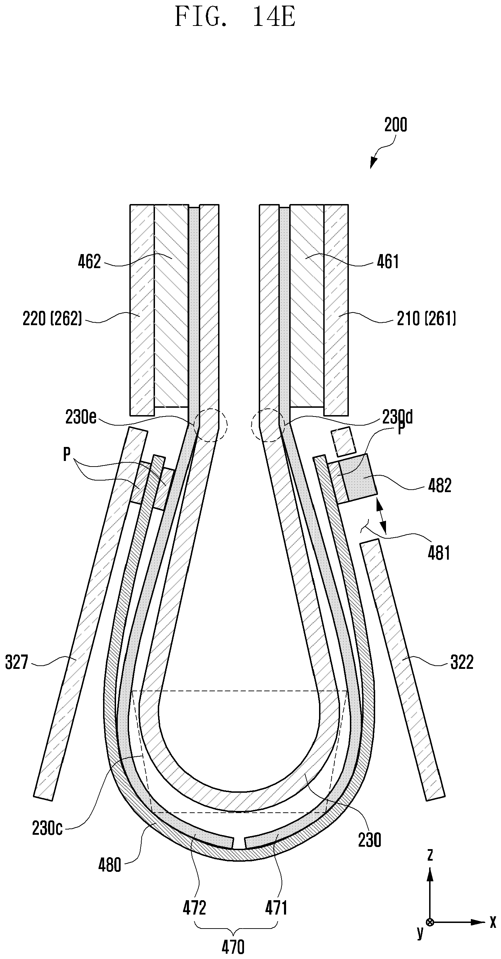

FIG 14D is a view illustrating a state in which a protection plate is guided to a hinge plate through a guide member according to various embodiments of the disclosure.FIG 14E is a cross-sectional view taken along the line 14e-14e of FIG 14D according to various embodiments of the disclosure.

With reference to FIGS. 14D and 14E, one end of the protective plate 480 may include a guide structure guided by a predetermined distance in order to accommodate the amount of deformation of the flexible display 230 when the electronic device 200 transitions from the unfolded state to the folded state or from the folded state to the unfolded state. For example, the protective plate 480 may include at least one guide member 482 attached to one end thereof. According to an embodiment, the at least one guide member 482 may be formed of metal or polymer and attached to the protective plate 480 through an adhesive member P. According to an embodiment, the at least one guide member 482 may be arranged to be guided along at least one guide slit 481 having a length formed in the first hinge plate 322. For example, the length of the at least one guide slit 481 may be greater than the amount of deformation of the flexible display 230. In some embodiment, the at least one guide slit 481 may be formed in the second hinge plate 327 or may be formed in both the first and second hinge plates 322 and 327.

According to various embodiments, an electronic device (e.g., the electronic device 200 in FIG 6) includes a first housing (e.g., the first housing 210 in FIG 6), a second housing (e.g., the second housing 220 in FIG 6), a hinge device (e.g., the hinge device 320 in FIG 5A), and a flexible display. The hinge device foldably combines the first housing and the second housing and includes a hinge module (e.g., the hinge modules 324 and 329 in FIG 5A), a first hinge plate (e.g., the first hinge plate 322 in FIG 6) corresponding to the first housing and connected to the hinge module, and a second hinge plate (e.g., the second hinge plate 327 in FIG 6) corresponding to the second housing and connected to the hinge module. The flexible display is disposed to be supported by the first housing, the first hinge plate, the second housing, and the second hinge plate, has a folding region (e.g., the folding region 230c in FIG 6) folded through the hinge module, a first bending region (e.g., the first bending region 230d in FIG 6) located at one side of the folding region, and a second bending region (e.g., the second bending region 230e in FIG 6) located on other side of the folding region, and includes a window layer (e.g., the window layer 410 in FIG 6), a display panel (e.g., the display panel 430 in FIG 6) disposed under the window layer, anda support plate (e.g., the support plate 450 in FIG 6) disposed under the display panel and including a pattern (e.g., the first pattern 4531 in FIG 6) having at least one opening and/or at least one recess formed at a position corresponding to at least the folding region. The first bending region and the second bending region include a reverse bending section bent with a curvature greater than a curvature of the folding region and bent in a direction opposite to a bending direction of the folding region when the electronic device is in a folded state. The first bending region is configured to refrain from being attached to the first housing and the first hinge plate, and the second bending region is configured to refrain from being attached to the second housing and the second hinge plate. The support plate maintains a specific thickness in a portion corresponding to the first and second bending regions.

According to various embodiments, the support plate may havebending rigidity set to 6×10⁷Gpa·*µ*m³ or less inat least the portion corresponding to the first and second bending regions.

According to various embodiments, in the support plate, a thickness of a portion corresponding to a region surrounding the first and second bending regions may be greater than a thickness of a portion corresponding to the first and second bending regions.

According to various embodiments, at least a part of the first hinge plate may be attached to a rear surface of the support plate between the folding region and the first bending region, andat least a part of the second hinge plate may be attached to the rear surface of the support plate between the folding region and the second bending region.

According to various embodiments, in an unfolded state of the electronic device, the first housing, the first hinge plate, the second housing, and the second hinge plate may form a same plane to support the flexible display.

According to various embodiments, the electronic device may further include a first reinforcing plate disposed between the first housing and the support plate, anda second reinforcing plate disposed between the second housing and the supporting plate. The first bending region and the second bending region may be configured to refrain from being attached to the first reinforcing plate and the second reinforcing plate, respectively.

According to various embodiments, the electronic device may further include a digitizer disposed under the support plate.

According to various embodiments, the digitizer may includea first digitizer disposed under the support plate and disposed to overlap with the first housing and the first hinge plate, anda second digitizer disposed to be spaced apart from the first digitizer under the support plate and disposed to overlap with the second housing and the second hinge plate.

According to various embodiments, the electronic device may further include a protective member attached to a rear surface of the first digitizer and/or the second digitizer. The protective member may be formed to have a size overlapping with at least a space between the first digitizer and the second digitizer when the flexible display is viewed from above. The protective member may be formed to have a size completely overlapping with at least a space between the first digitizer and the second digitizer when the flexible display is viewed from above.

According to various embodiments, the electronic device may further include a first reinforcing plate disposed between the first digitizer and the first housing, anda second reinforcing plate disposed between the second digitizer and the second housing.

According to various embodiments, the electronic device may further include an integrated reinforcing plate disposed under the digitizer to correspond from the first digitizer to the second digitizer.

According to various embodiments, the integrated reinforcing plate may include a pattern having at least one opening and/or at least one recess formed in at least a part of a region corresponding to a region from the first bending region to the second bending region.

According to various embodiments, the electronic device may further include a protective plate disposed between the first and second hinge plates and the digitizer.

According to various embodiments, the protective plate may be attached to the first hinge plate, the second hinge plate, the first digitizer, and/or the second digitizer.

According to various embodiments, at least one end of the protective plate may be guided by a predetermined length through a guide slit formed in the first hinge plate and/or the second hinge plate.

According to various embodiments, an electronic device (e.g., the electronic device 200 in FIG 10A) includes a first housing (e.g., the first housing 210 in FIG 10A), a second housing (e.g., the second housing 220 in FIG 10A), a hinge device (e.g., the hinge device 320 in FIG 5A), a flexible display, a digitizer (e.g., the digitizers 471 and 472 in FIG 10A), and a reinforcing plate (e.g., the reinforcing plater 463 in FIG 10A). The hinge device foldably combines the first housing and the second housing. The flexible display is disposed to be supported by the first housing and the second housing, has a folding region (e.g., the folding region 230c in FIG 10A) folded through the hinge device, a first bending region (e.g., the first bending region 230d in FIG 10A) located at one side of the folding region, and a second bending region (e.g., the second bending region 230e in FIG 10A) located on other side of the folding region, and includes a window layer (e.g., the window layer 410 in FIG 10A), a display panel (e.g., the display panel 430 in FIG 10A) disposed under the window layer, and a support plate (e.g., the support plate 450 in FIG 10A) disposed under the display panel and including a pattern (e.g., the first pattern 4531 in FIG 10A) having at least one opening and/or at least one recess formed at a position corresponding to at least the folding region. The first bending region and the second bending region include a reverse bending section bent with a curvature greater than a curvature of the folding region and bent in a direction opposite to a bending direction of the folding region when the electronic device is in a folded state. The digitizer is disposed under the support plate, and the reinforcing plate is disposed under the digitizer. The reinforcing plate may include a second pattern (e.g., the second pattern 4631 in FIG 10A) having at least one opening and/or at least one recess formed in a portion corresponding to at least the folding region.

According to various embodiments, the second pattern may be formed in the portion corresponding to the first bending region and the second bending region.

According to various embodiments, the reinforcing plate may maintain a specific thickness in the portion corresponding to the first bending region and the second bending region.

According to various embodiments, the reinforcing plate and the support plate may have bending rigidity set to 6×10⁷Gpa·*µ*m³ or less inthe portion corresponding to the first and second bending regions. A bending rigidity set to 6×10⁷Gpa·*µ*m³ or less allows a sharp bending in the first and second bending regions without damaging the flexible display.

According to various embodiments, in the reinforcing plate, a thickness of a portion corresponding to a region surrounding the first and second bending regions may be greater than a thickness of a portion corresponding to the first and second bending regions.

Meanwhile, the embodiments disclosed in the specification and drawings are only presented as specific examples to easily explain the technical contents of the disclosure and help the understanding of the disclosure, and it is not intended to limit the scope of the disclosure. Accordingly, it should be interpreted that all changes or modifications derived from the subject matter of the disclosure are included in the scope of various embodiments of the disclosure.

## Claims

1. An electronic device (200)comprising:
a first housing (210);
a second housing (220);
a hinge device (320) foldably combining the first housing (210) and the second housing (220) and including:
a hinge module (324, 329);
a first hinge plate (322) corresponding to the first housing (210) and connected to the hinge module (324, 329); and
a second hinge plate (327) corresponding to the second housing (220) and connected to the hinge module (324, 329); and
a flexible display (230)disposed to be supported by the first housing (210), the first hinge plate (322), the second housing (220), and the second hinge plate (327),having a folding region (230c)folded through the hinge module (324, 329), a first bending region (230d)located at one side of the folding region (230c), and a second bending region (230e)located on other side of the folding region (230c), and including:
a window layer (410);
a display panel (430) disposed under the window layer (410); and
a support plate (450) disposed under the display panel (430) and including a pattern (4531) having at least one opening and/or at least one recess (4541, 4541a, 4542) formed at a position corresponding to at least the folding region (230c),
wherein the first bending region (230d) and the second bending region (230e) include a reverse bending section bent with a curvature greater than a curvature of the folding region (230c) and bent in a direction opposite to a bending direction of the folding region (230c) when the electronic device (200) is in a folded state,
wherein the first bending region (230d) is configured to refrain from being attached to the first housing (210) and the first hinge plate (322),
wherein the second bending region (230e) is configured to refrain from being attached to the second housing (220) and the second hinge plate (327), and
wherein the support plate (450) maintains a specific thickness in a portion corresponding to the first bending region (230d) and the second bending region (230e).

2. The electronic device (200) of claim 1, wherein the support plate (450) has bending rigidity set to 6×10⁷Gpa·*µ*m³ or less in at least the portion corresponding to the first bending region (230d) and the second bending region (230e).

3. The electronic device (200) of any one of the preceding claims, wherein in the support plate (450), a thickness (t1) of a portion corresponding to a region surrounding the first bending region (230d) and the second bending region (230e) is greater than a thickness (t6, t7) of a portion corresponding to the first bending region (230d)and the second bending region (230e).

4. The electronic device (200) of any one of the preceding claims, wherein at least a part of the first hinge plate (322) is attached to a rear surface of the support plate (450) between the folding region (230c) and the first bending region (230d), and
wherein at least a part of the second hinge plate (327) is attached to the rear surface of the support plate (450) between the folding region (230c) and the second bending region (230e).

5. The electronic device (200) of any one of the preceding claims, wherein in an unfolded state of the electronic device (200), the first housing (210), the first hinge plate (322), the second housing (220), and the second hinge plate (327) form a same plane to support the flexible display (230).

6. The electronic device (200) of any one of the preceding claims, further comprising:
a first reinforcing plate (461) disposed between the first housing (210) and the support plate (450); and
a second reinforcing plate (462) disposed between the second housing (220) and the support plate (450),
wherein the first bending region (230d) and the second bending region (230e) are configured to refrain from being attached to the first reinforcing plate (461) and the second reinforcing plate (462), respectively.

7. The electronic device (200) of any one of the preceding claims, further comprising:
a digitizer (470) disposed under the support plate (450).

8. The electronic device (200) of claim 7, wherein the digitizer (470) includes:
a first digitizer (471) disposed under the support plate (450) and disposed to overlap with the first housing (210) and the first hinge plate (322); and
a second digitizer (472) disposed to be spaced apart from the first digitizer (471) under the support plate (450) and disposed to overlap with the second housing (220) and the second hinge plate (327).

9. The electronic device (200) of claim 8, further comprising:
a protective member (473) attached to a rear surface of the first digitizer (471) and/or the second digitizer (472),
wherein the protective member (473) is formed to have a size overlapping with at least a space between the first digitizer (471) and the second digitizer (472) when the flexible display (230) is viewed from above (-z).

10. The electronic device (200) of any one of claims 8 and 9, further comprising:
a first reinforcing plate (461) disposed between the first digitizer (471) and the first housing (210); and
a second reinforcing plate (462) disposed between the second digitizer (472) and the second housing (220).

11. The electronic device (200) of claim 10, further comprising:
an integrated reinforcing plate (463) disposed under the digitizer (470) to correspond from the first digitizer (471) to the second digitizer (472).

12. The electronic device (200) of claim 11, wherein the integrated reinforcing plate (463) includes a pattern (4631) having at least one opening and/or at least one recess (4632, 4633) formed in at least a part of a region corresponding to a region from the first bending region (230d) to the second bending region (230e).

13. The electronic device (200) of any one of claims 8 and 10, further comprising:
a protective plate (480) disposed between the first hinge plate (322) and the digitizer (470), and between the second hinge plate (327) and the digitizer.

14. The electronic device (200) of claim 13, wherein the protective plate (480) is attached to the first hinge plate (322), the second hinge plate (327), the first digitizer (471), and/or the second digitizer (472).

15. The electronic device (200) of any one of claims 13 and 14, wherein at least one end of the protective plate (480) is guided by a predetermined length through a guide slit (481) formed in the first hinge plate (322) and/or the second hinge plate (327).
